(19) Europäisches Patentamt
European Patent Office
Office européen des brevets

(11) EP 4 600 283 A1

(12) # EUROPEAN PATENT APPLICATION
published in accordance with Art. 153(4) EPC

(43) Date of publication:
**13.08.2025 Bulletin 2025/33**

(21) Application number: **23889044.6**

(22) Date of filing: **02.11.2023**

(51) International Patent Classification (IPC):
***C08F 299/00*** (2006.01) ***C08F 212/14*** (2006.01)
***C08F 212/12*** (2006.01) ***C08F 212/08*** (2006.01)
***C08F 210/06*** (2006.01) ***C08F 210/08*** (2006.01)
***C08F 8/30*** (2006.01) ***C08G 81/02*** (2006.01)
***C08J 5/22*** (2006.01) ***C25B 13/08*** (2006.01)

(52) Cooperative Patent Classification (CPC):
**C08F 8/30; C08F 210/06; C08F 210/08; C08F 212/08; C08F 212/12; C08F 212/14; C08F 299/00; C08G 81/02; C08J 5/22; C25B 13/08**

(86) International application number:
**PCT/KR2023/017424**

(87) International publication number:
**WO 2024/101782 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.11.2022 KR 20220150712**

(71) Applicant: **Hanwha Solutions Corporation**
**Jung-gu**
**Seoul 04541 (KR)**

(72) Inventors:
- **KIM, Tae-Hyun**
  **Incheon 22003 (KR)**
- **MIN, Kyungwhan**
  **Incheon 21998 (KR)**
- **CHOI, Jiyong**
  **Incheon 22351 (KR)**
- **LEE, Yerim**
  **Incheon 22100 (KR)**

(74) Representative: **Berggren Oy**
**P.O. Box 16**
**Eteläinen Rautatiekatu 10A**
**00101 Helsinki (FI)**

(54) **CROSSLINKED COPOLYMER, POLYMER MEMBRANE COMPRISING SAME, AND ANION EXCHANGE MEMBRANE COMPRISING SAME POLYMER MEMBRANE**

(57) The subject disclosure relates to a crosslinked copolymer that has outstanding ion exchange capacity, exhibits high ion conductivity and water content under diverse temperature conditions, and features high density, low hydrogen permeability, and excellent thermal and oxidative stability, making it well-suited as an anion exchange membrane for water electrolysis to produce high-purity hydrogen and oxygen

[Fig. 1]

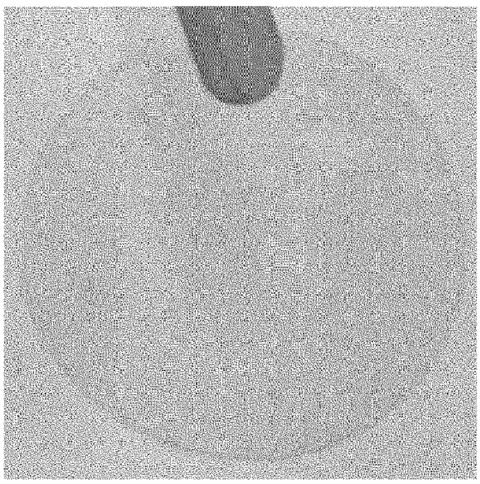

EP 4 600 283 A1

## Description

### [Technical Field]

Cross-Reference with Related Application(s)

This application claims the benefit of priority to Korean Patent Application No. 10-2022-0150712, filed on November 11, 2022, the entire disclosure of which is incorporated herein by reference.

The subject disclosure relates to a crosslinked copolymer, a polymer membrane comprising the crosslinked copolymer, and an anion exchange membrane comprising the polymer membrane.

### [Background of Art]

A water electrolysis technology that uses electrolysis of water does not generate greenhouse gases, uses water as a nearly limitless feedstock, and enables large-capacity, long-duration storage of surplus power when linked to renewable energy. A water electrolysis device consists of electrodes that generate hydrogen and oxygen, and an ion exchange membrane that prevents the mixing of gases and allows ion transfer. Among these components, the ion exchange membrane is a key part determining efficiency and stability of the water electrolysis device.

Low-temperature water electrolysis technologies include alkaline water electrolysis, polymer electrolyte membrane water electrolysis, and anion exchange membrane water electrolysis. Of these, anion exchange membrane water electrolysis is considered an ideal water electrolysis technology combining the advantages of alkaline water electrolysis and polymer electrolyte membrane water electrolysis. Anion exchange membrane water electrolysis has a structure similar to that of polymer electrolyte membrane water electrolysis, which allows for highpressure and differential-pressure operation, enables operation at high current densities, and also enables compact system design. Unlike polymer electrolyte membrane water electrolysis, anion exchange membrane water electrolysis operates in an alkaline environment and thus can use non-precious-metal catalysts, thereby lowering material cost and facilitating economically competitive green hydrogen production. Anion exchange membrane water electrolysis is still in the research and development stage, and to achieve commercialization, problems related to the low ion conductance of the anion exchange membrane and the performance and reliability of non-precious-metal catalysts must be overcome.

Meanwhile, poly(styrene-ethylene-co-butylene-styrene) (hereinafter "SEBS"), a type of triblock copolymer, has been widely used as a polymer material for anion exchange membranes, thanks to its high ion conductivity caused by the outstanding morphology of a block-type polymer and its high alkaline stability arising from its non-aryl-ether-type polymer structure.

However, in the case of SEBS-based anion exchange membranes, when ion exchange capacity (IEC) is increased, the water content and swelling ratio rise sharply due to the elasticity of SEBS, and the resulting dilution effect can actually reduce conductivity. Also, high water uptake and swelling ratio, along with low tensile strength, can greatly lower mechanical and physical stability, making the membrane very difficult to handle.

One attempt to solve these problems involved a polymer obtained by crosslinking SEBS polymer and polyphenylene oxide polymer using N,N,N',N'-tetramethyl-1,6-hexanediamine as a crosslinker (J. Membr. Sci. 564 (2018), 492-500). However, because the reaction sites in the crosslinker and both polymers were all identical, it was impossible to regulate a 1:1 reaction between the SEBS polymer and the polyphenylene oxide polymer, resulting in phase separation that produced an inhomogeneous membrane with non-reproducible hydroxide-ion conductivity.

To address this, a crosslinked polymer formed by crosslinking SEBS polymer with a polyphenylene oxide polymer having triazole groups and amine groups, without introducing an additional crosslinker, was developed (Korean Patent No. 10-2184530). However, that crosslinked polymer had a complicated synthesis process and lacked adequate hydroxide ion conductivity and water content at high temperature to be used in a water electrolysis cell.

[Prior Art Documents]

(Patent Document 1) Korean Patent No. 10-2184530

(Non-patent Document 1) Zhihua Wang, Ziming Li, Nanjun Chen, Chuanrui Lu, Fanghui Wang, Hong Zhu, Crosslinked poly (2,6-dimethyl-1,4-phenylene oxide) polyelectrolyte enhanced with poly (styrene-b-(ethylene-co-butylene)-b-styrene) for anion exchange membrane applications, J. Membr. Sci. 564 (2018), 492-500.

### [Detailed Description of the Invention]

**[Technical Problem]**

The subject disclosure relates to a novel crosslinked copolymer having excellent hydroxide ion conductivity and water content, and outstanding thermal and oxidation stability, which can be suitably used as an anion exchange membrane for water electrolysis.

**[Technical Solution]**

According to one embodiment of the subject disclosure, there is provided a crosslinked copolymer including a main chain represented by the following Chemical Formula 1, and a side chain represented by the following Chemical Formula 2:

[Chemical Formula 1]

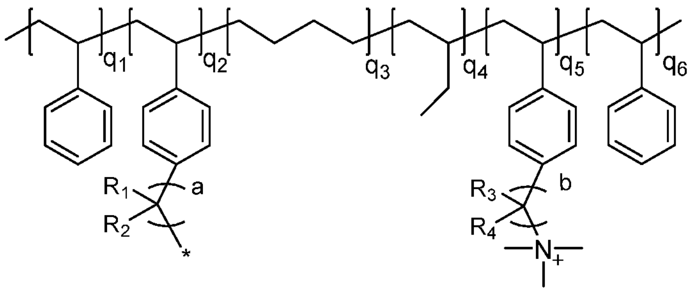

in Chemical Formula 1,

* represents the bonding position with Chemical Formula 2,
a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10,
$R_1$ to $R_4$ are each independently hydrogen or $-(CH_2)_p-CH_3$, where p is an integer of 0 to 5;

[Chemical Formula 2]

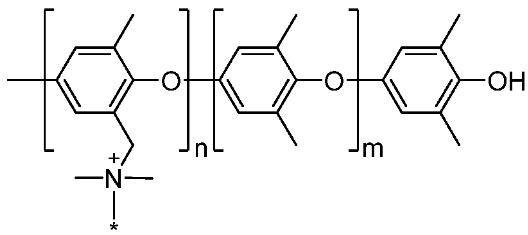

in Chemical Formula 2,

* represents the bonding position with Chemical Formula 1,
n and m are each independently an integer of 10 to 50.

In addition, according to one embodiment of the subject disclosure, there is provided a method for preparing the crosslinked copolymer, including:

(a) preparing a poly(styrene-b-ethylene-co-butylene-b-styrene) polymer represented by Chemical Formula 1-1 below,
(b) preparing a polyphenylene oxide-based polymer represented by Chemical Formula 2-1 below, and
(c) crosslinking the poly(styrene-b-ethylene-co-butylene-b-styrene) polymer and the polyphenylene oxide-based polymer to produce the crosslinked copolymer:

[Chemical Formula 1-1]

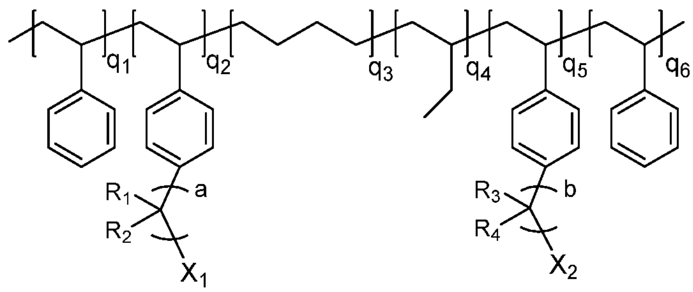

In Chemical Formula 1-1,

a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10,
$R_1$ to $R_4$ are each independently hydrogen or $-(CH_2)_p-CH_3$ (p is an integer of 0 to 5), and
$X_1$ and $X_2$ are each independently a halogen group;

[Chemical Formula 2-1]

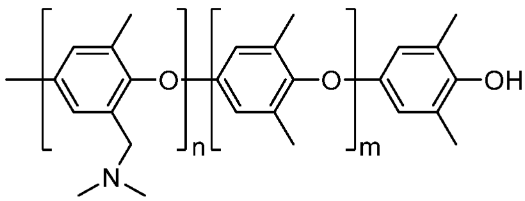

In Chemical Formula 2-1,
n and m are each independently an integer of 10 to 50.

**[Advantageous Effects]**

The crosslinked copolymer of the subject disclosure has excellent ion exchange capacity, exhibits high ion conductivity and water content under a wide range of temperature conditions, and has high density and low hydrogen permeability. In addition, the crosslinked copolymer demonstrates outstanding thermal and oxidative stability under operating conditions of a water electrolysis device, and can therefore be suitably used as an anion exchange membrane for the production of high-purity hydrogen and oxygen.

**[Brief Description of the Drawings]**

Fig. 1 is a photograph of a polymer membrane prepared from PPO-SEBS in Example 1.
Fig. 2 is a photograph of a polymer membrane prepared from DA-x30-PPO-SEBS in Comparative Example 1.
Fig. 3 shows the $^1$H-NMR spectrum (a) and IR spectrum (b) of Br-PPO produced in step (1-1) of Example 1.
Fig. 4 shows the $^1$H-NMR spectrum (a) and IR spectrum (b) of DMA-PPO produced in step (1-2) of Example 1.
Fig. 5 compares the $^1$H-NMR and IR spectra of Br-PPO produced in step (1-1) and DMA-PPO produced in step (1-2) of Example 1.
Fig. 6 shows the $^1$H-NMR spectrum (a) and IR spectrum (b) of Ac-SEBS produced in step (2-1) of Example 1.
Fig. 7 shows the $^1$H-NMR spectrum (a) and IR spectrum (b) of Re-SEBS produced in step (2-2) of Example 1.
Fig. 8 compares the $^1$H-NMR and IR spectra of Ac-SEBS produced in step (2-1) and Re-SEBS produced in step (2-2) of Example 1.
Fig. 9 shows the thermogravimetric analysis results of PPO-SEBS of Example 1 and TQA SEBS of Comparative Example 3.
Fig. 10 shows the oxidation stability test results of PPO-SEBS of Example 1 and TQA SEBS of Comparative Example

3.
Fig. 11 shows the tensile strength and elongation measurement results of PPO-SEBS of Example 1.

**[Detailed Description of the Embodiments]**

The terminology used herein is for the purpose of describing particular embodiments only and is not intended to be limiting of the invention. The singular forms are intended to include the plural forms as well, unless the context clearly indicates otherwise.
It will be further understood that the terms "include", "comprise", or "have" when used in this disclosure, specify the presence of stated features, steps, components, or combinations thereof, but do not preclude the presence or addition of one or more other features, steps, components, or combinations thereof.
As the subject invention can be variously modified and have various forms, specific embodiments thereof are shown by way of examples and will be described in detail. However, it is not intended to limit the subject invention to the particular form disclosed and it should be understood that the subject invention includes all modifications, equivalents, and replacements within the idea and technical scope of the subject invention.
Hereinafter, the subject invention will be described in detail.
According to one embodiment of the subject disclosure, there is provided a crosslinked copolymer including a first chain represented by the following Chemical Formula 1 and a second chain represented by the following Chemical Formula 2, wherein the first chain and second chain are crosslinked with each other:

[Chemical Formula 1]

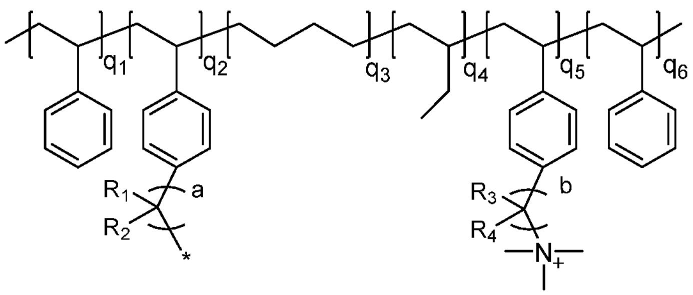

in Chemical Formula 1,

* represents the bonding position with Chemical Formula 2,
a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10,
$R_1$ to $R_4$ are each independently hydrogen or $-(CH_2)_p-CH_3$, where p is an integer of 0 to 5;

[Chemical Formula 2]

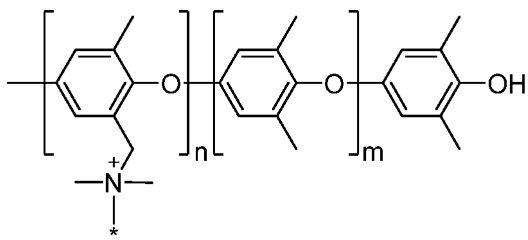

in Chemical Formula 2,

* represents the bonding position with Chemical Formula 1,
n and m are each independently an integer of 10 to 50.

The crosslinked copolymer of the subject disclosure has a structure in which a first chain includes poly(styrene-b-ethylene-co-butylene-b-styrene) (SEBS) and a second chain includes polyphenylene oxide (PPO) are crosslinked via alkyl amine groups.

Because of the structural feature, the crosslinked copolymer exhibits high ionexchange capacity, hydroxide ion conductivity, water content, and swelling ratio. Compared with conventional ion exchange membranes, the crosslinked copolymer has higher density and lower hydrogen permeability, making it suitable for use as an anion exchange membrane for water electrolysis designed to produce high-purity hydrogen and oxygen. Furthermore, the crosslinked copolymer does not include a triazole aromatic functional group in the polymer chain, giving it excellent oxidation stability and enabling stable long-term use in a water electrolysis cell.

The ratio of the first chain represented by the Chemical Formula 1 and the second chain represented by the Chemical Formula 2 may be adjusted according to desired physical properties. For example, the crosslinked copolymer may include 10 mol or more, 20 mol or more, 30 mol or more, or 40 mol or more, and 70 mol or less, 60 mol or less, or 50 mol or less of the second chain based on 100 mol of the first chain. If the second chain is less than 10 mol based on 100 mol of the first chain, mechanical properties such as tensile strength might decline; if the second chain is more than 70 mol based on 100 mol of the first chain, mechanical properties remain excellent but hydroxide ion conductivity and alkaline stability may degrade.

In the subject specification, $q_1$ through $q_6$, a, b, n, and m represent the number of repeat units.

Preferably, the sum of $q_1$, $q_2$, $q_5$, and $q_6$ may be an integer of 100 or more, 150 or more, 200 or more, 250 or more, 300 or more, 350 or more, 400 or more, 450 or more, or 500 or more, and 1,000 or less, 950 or less, 900 or less, 850 or less, or 800 or less.

Preferably, the sum of $q_3$ and $q_4$ may be an integer of 150 or more, 200 or more, 250 or more, 300 or more, 350 or more, 400 or more, 450 or more, 500 or more, 550 or more, or 600 or more, and 2,000 or less, 1,800 or less, 1,600 or less, 1,500 or less, 1,400 or less, 1,200 or less, or 1,000 or less.

Preferably, $q_1$ to $q_6$ may each independently be an integer of 10 or more, 20 or more, 25 or more, or 30 or more and 500 or less, 450 or less, 400 or less, 350 or less, or 300 or less.

Preferably, the ratio of the sum of $q_1$, $q_2$, $q_5$, and $q_6$ to the sum of $q_1$ to $q_6$, that is, the total mole fraction of styrene-derived repeating units relative to all repeating units in Chemical Formula 1 may be 0.2 or more, 0.25 or more, or 0.3 or more, and 0.5 or less, or 0.45 or less.

Preferably, the ratio of the sum of $q_1$ and $q_6$ to the sum of $q_1$, $q_2$, $q_5$, and $q_6$, that is, the total mole fraction of unsubstituted styrene repeating units relative to all styrene-derived repeating units in Chemical Formula 1 may be 0.2 or more, 0.25 or more, 0.3 or more, or 0.35 or more, and 0.5 or less, 0.45 or less, or 0.4 or less.

Preferably, n is an integer of 10 to 50, and m is an integer of 25 to 45.

Preferably, the ratio of n to (n + m) is between 0.15 and 0.70, or between 0.18 and 0.66.

Preferably, a and b are each independently an integer of at least 3 or 4 and up to 10, 9, 8, 7, or 6.

Preferably, $R_1$ to $R_4$ are each independently hydrogen or $-(CH_2)_x-CH_3$ where x is 0 to 3, or 0 to 2. Preferably, all $R_1$ to $R_4$ are hydrogen.

Specifically, the crosslinked copolymer may include a structure represented by the following Chemical Formula 3:

[Chemical Formula 3]

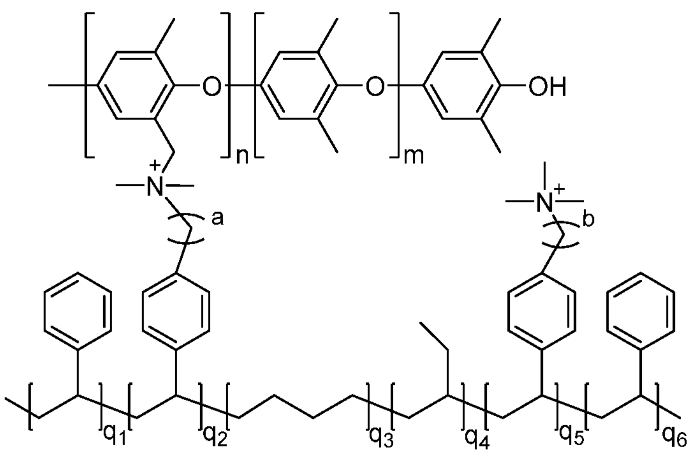

In Chemical Formula 3, $q_1$ to $q_6$, a, b, n, and m are as defined above for Chemical Formulae 1 and 2.

More preferably, the crosslinked copolymer may include a structure represented by Chemical Formula 4 below:

[Chemical Formula 4]

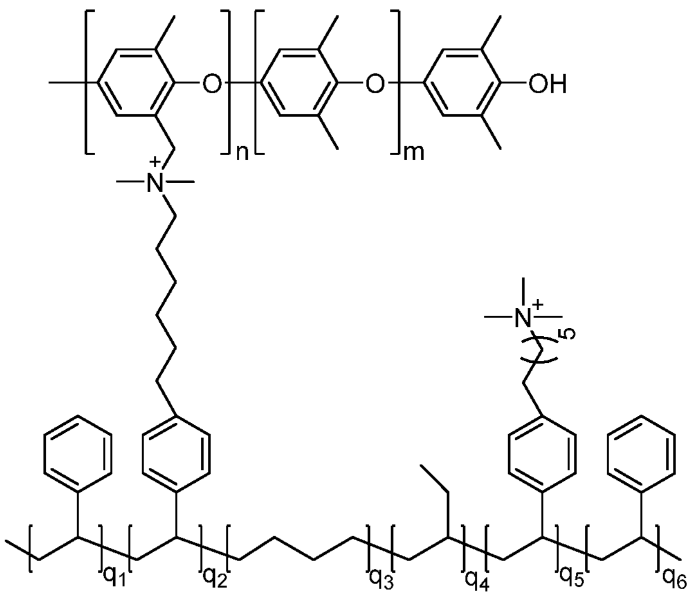

In Chemical Formula 4, $q_1$ to $q_6$, a, b, n, and m are as defined above for Chemical Formulae 1 and 2.

The above crosslinked copolymer has a positively charged quaternary ammonium group and can selectively pass only anions. Therefore, the crosslinked copolymer can be applied as an anion exchange membrane. The counterion (anion) group for the cation (quaternary ammonium group) of the crosslinked copolymer may be $OH^-$, $Cl^-$, Br, or $HCO_3^-$, preferably $OH^-$.

Accordingly, in one embodiment of the subject disclosure, there is provided a polymer membrane including the crosslinked copolymer described above.

The polymer membrane including the crosslinked copolymer may have a thickness of 20 μm or more, 30 μm or more, 45 μm or more, or 55 μm or more, and 70 μm or less, 60 μm or less, or 55 μm or less. If the membrane thickness is less than 20 μm, the hydrogen permeability may rise sharply, making it difficult to apply for high-purity hydrogen production. Conversely, if the thickness exceeds 70 μm, the mechanical properties may remain excellent but the increased thickness raises resistance, reducing hydroxide ion conductivity and causing current density and power density to drop.

The polymer membrane may have an ion exchange capacity (IEC) of 1.15 meq/g or more, 1.20 meq/g or more, or 1.30 meq/g or more, and 1.95 meq/g or less, 1.90 meq/g or less, or 1.80 meq/g or less. However, the ion exchange capacity of the polymer membrane is not limited to above range, as it depends on the mole ratio of the first chain to the second chain.

The polymer membrane including the crosslinked copolymer that contains the first chain and the second chain described above may deliver higher output characteristics when used in a water electrolysis cell. In addition, the polymer membrane has a high density and low hydrogen permeability, which is advantageous for preparing high-purity hydrogen and oxygen.

Hence, a polymer membrane exhibiting such properties can be suitably used as an anion exchange membrane for water electrolysis.

Methods for measuring ion exchange capacity, hydroxide ion conductivity, water content, swelling ratio, hydrogen permeability, and density are described in detail in the Examples below.

Meanwhile, according to one embodiment of the subject disclosure, there is provided a method for preparing the crosslinked copolymer described above. Specifically, the method includes:

(a) preparing the polymer of poly(styrene-b-ethylene-co-butylene-b-styrene) represented by the following Chemical Formula 1-1,

(b) preparing the polyphenylene oxide-based polymer represented by the following Chemical Formula 2-1, and

(c) crosslinking the poly(styrene-b-ethylene-co-butylene-b-styrene) polymer and the polyphenylene oxide-based polymer to form the crosslinked copolymer.

[Chemical Formula 1-1]

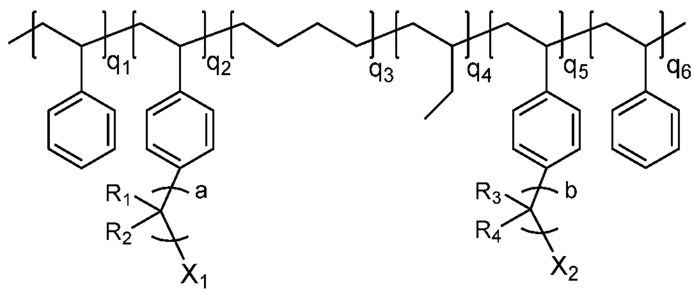

In Chemical Formula 1-1,

a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10,
$R_1$ to $R_4$ are each independently hydrogen or $-(CH_2)_p-CH_3$ (p is an integer of 0 to 5), and
$X_1$ and $X_2$ are each independently a halogen group;

[Chemical Formula 2-1]

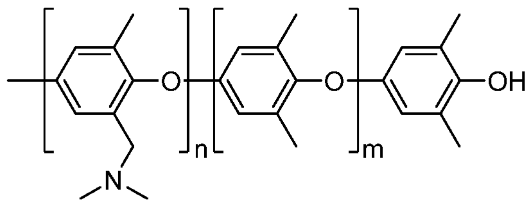

In Chemical Formula 2-1,
n and m are each independently an integer of 10 to 50.

Preferred ranges of $q_1$ to $q_6$, a, b, $R_1$ to $R_4$, n, and m in Chemical Formulae 1-1 and 2-1 are the same as those described in Chemical Formulae 1 and 2 above.

$X_1$ and $X_2$ are each independently F, Cl, Br, or I, and are preferably Br.

Step (a) introduces a halogen alkyl group onto the styrene portion of the SEBS polymer. Specifically, the poly(styrene-b-ethylene-co-butylene-b-styrene) polymer represented by Chemical Formula 1-1 can be prepared via Friedel-Crafts acylation of SEBS and subsequent reduction of the resulting carbonyl groups.

The acyl halide used in the acylation reaction is selected in consideration of the number of a and b. Specifically, as the acyl halide, alkanoyl chloride having a halogen group at the end of an alkyl chain represented by X-R-COCl (wherein X is halogen and R is $C_{1-29}$ alkyl) may be used. When a and b are different from each other or $X_1$ and $X_2$ are different from each other, the acylation reaction may be performed two or more times using different types of acyl halides.

Aluminum chloride ($AlCl_3$) may be used as a catalyst for the acylation reaction, and the reaction may be performed at 20 to 30 °C for 8 to 24 hours.

The reduction reaction of a carbonyl group may be performed using methods known in the art without limitation. For example, the carbonyl group may be reduced by adding triethylsilane and trifluoroacetic acid, followed by reacting at 90 to 120 °C for 20 to 30 hours. Through this reaction, a poly(styrene-b-ethylene-co-butylene-b-styrene)-based polymer represented by the Chemical Formula 1-1 can be obtained.

It is preferable that the poly(styrene-b-ethylene-co-butylene-b-styrene)-based copolymer contains 30 mol or more, 40 mol or more, 50 mol or more, 55 mol or more, or 60 mol or more, and 90 mol or less, 80 mol or less, 75 mol or less, 70 mol or less, or 65 mol or less of halogen groups based on 100 mol of styrene repeating units. The number of mol of halogen groups relative to styrene repeating units can be adjusted by adjusting the number of mol of acyl halide relative to the number of mol of styrene in the SEBS polymer during the acylation reaction.

Step (b) prepares a polyphenylene oxide-based polymer having a tertiary amine group. For example, one may brominate the benzylic site of poly(2,6-dimethyl-1,4-phenylene oxide) to obtain a brominated polyphenylene oxide polymer, and then perform an amination reaction.

Bromination may be conducted using bromine ($Br_2$) or N-bromosuccinimide (NBS). The reaction temperature

may be, for example, 120 to 140°C, and the reaction time 3 to 5 hours.

Next, the brominated polyphenylene oxide-based polymer thus obtained is reacted with dimethylamine to yield the polyphenylene oxide-based polymer represented by Chemical Formula 2-1. The amination reaction may be carried out at 50 to 100°C for 12 to 24 hours.

Step (c) involves reacting the poly(styrene-b-ethylene-co-butylene-b-styrene) polymer and the polyphenylene oxide-based polymer. Because the poly(styrene-b-ethylene-co-butylene-b-styrene) polymer includes halogen atoms, and the polyphenylene oxide-based polymer includes tertiary amine groups, they can easily be crosslinked via nucleophilic substitution without a separate crosslinker.

During step (c), the polyphenylene oxide-based polymer is preferably used in an amount of 10 mol or more, 20 mol or more, 30 mol or more, or 40 mol or more, and 70 mol or less, 60 mol or less, or 50 mol or less, based on 100 mol of the halogen groups contained in the poly(styrene-b-ethylene-co-butylene-b-styrene) polymer. A crosslinked polymer produced in this mol ratio can have an appropriate ratio of first chain to second chain, and thus exhibit excellent hydroxide ion conductivity and mechanical properties.

The reaction in step (c) may be performed at 40 to 60°C for 10 to 16 hours, preferably 45 to 55°C for 11 to 13 hours. If the reaction temperature is below 40°C or the reaction time is shorter than 10 hours, insufficient crosslinking may lower hydroxide ion conductivity and alkaline stability. Conversely, if the reaction temperature exceeds 60°C or the reaction time exceeds 16 hours, excessive crosslinking may cause the crosslinked polymer solution to gel.

Optionally, after step (c), one may further perform step (d)-reacting the crosslinked copolymer with trimethylamine-to convert all remaining halogen atoms into amine groups. For example, step (d) can be carried out at 40 to 60°C for 10 to 30 hours, preferably 45 to 55°C for 20 to 30 hours.

In the subject disclosure, SEBS is functionalized to contain halogen moieties, which are reacted with a PPO chain that includes amine groups to form a crosslinked copolymer. This prevents reactions among SEBS chains themselves or among PPO chains themselves and allows quantitative crosslinking between SEBS and PPO. Consequently, no phase separation occurs during membrane fabrication, and a consistent, reproducible quality can be achieved.

Additionally, the method can produce the crosslinked copolymer in a simpler manner and at high yield, increasing process productivity and lowering cost.

Hereinafter, the present invention will be described in more detail by the following examples. However, the following examples are only for exemplifying the present invention, and the scope of the present invention is not limited only to these.

[Examples]

**Example 1: Preparation of PPO-SEBS (70% Funct.)**

(1) Preparation of Dimethylamine-functionalized-PPO (DMA-PPO)

(1-1) Preparation of Brominated PPO (Br-PPO)

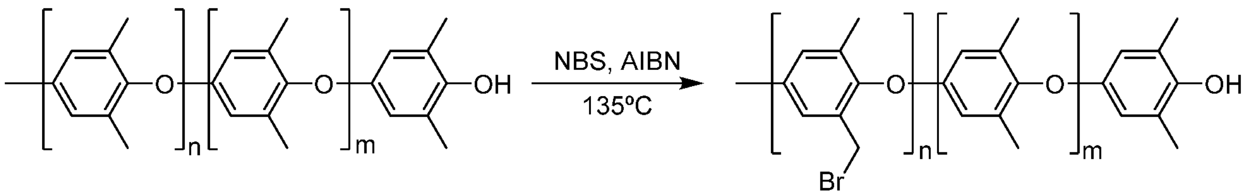


(In the reaction scheme above, n is 33, m is 34.)

A two-neck round-bottom flask equipped with a reflux condenser was charged with 5 g (1 equivalent) of poly(2,6-dimethyl-1,4-phenylene oxide) (PPO, Asahi Kasei) and 60 mL of chlorobenzene (12 mL per 1 g PPO). Nitrogen was purged into the flask, and the mixture was stirred at 50°C until the polymer dissolved completely.

After confirming complete dissolution of the polymer, a mixture of 4.0736 g (0.55 eq) of n-bromosuccinimide (NBS, TCI Chemical) and 0.2050 g (0.03 eq) of 2,2'-azobisisobutyronitrile (AIBN) was added to the polymer solution.

Next, the flask was heated to 135°C, and the reaction was stirred for 4.5 hours at that temperature.

After completion of the reaction, the reaction mixture was cooled to room temperature, and 500 mL of methanol was added to precipitate the polymer. The precipitated polymer was washed with methanol about four times, until the filtrate became transparent. The polymer was then recovered by vacuum filtration and dried in a vacuum oven at 80°C for at least 12 hours, yielding the polymer. From $^{1}$H-NMR and IR analyses (FIG. 3), it was confirmed that the polymer was PPO

brominated to 32.9 wt% (Br-PPO).

$^1H$ NMR(400MHz, $CDCl_3$) δ 6.76-6.42 (33H, t, $H_1$), 6.58-6.44 (67H, d, $H_2$), 4.41-4.30 (35H, s, $H_3$), 2.16-2.04 (220H, s, $H_4$)

(1-2) Preparation of Dimethylamine-functionalized-PPO (DMA-PPO)

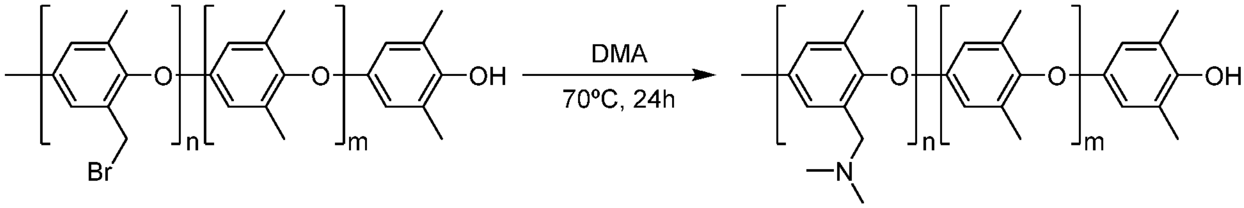


(In the reaction scheme above, n is 33, m is 34.)

Three grams (1 eq) of the Br-PPO polymer obtained in step (1) above was dissolved in 30 mL N-methyl-2-pyrrolidone (NMP, 10 mL per 1 g polymer) at 70°C.

After confirming complete dissolution, 9.14 mL (3 eq) of a dimethylamine solution (2 M in THF, TCI chemicals) was added, and the mixture was stirred at 70°C for 24 hours.

After completion of the reaction, the mixture was cooled to room temperature, then precipitated in 500 mL of a methanol/1 M KOH mixed solution (MeOH : 1 M KOH = 3:1 by volume). The precipitated polymer was washed about four times with methanol until the filtrate became clear. The polymer was then recovered by vacuum filtration and dried in a vacuum oven at 80°C for at least 12 hours.

$^1$H-NMR analysis of the resulting polymer showed that the $CH_2Br$ peak (δ ~4.3 ppm) had disappeared completely and a $CH_2N(CH_3)_2$ peak (δ ~3.3 ppm) had formed (FIGS. 4(a) and 5(a)), indicating that the bromine in Br-PPO was fully substituted by amine to yield DMA-PPO.

$^1H$ NMR(400MHz, $CDCl_3$) δ 6.79-6.71 (1.3H, d, $H_4$), 6.55-6.42 (4.2H, d, $H_5$), 3.33-3.21 (2H, s, $H_2$), 2.22-2.14 (6H, s, $H_1$), 2.14-2.02 (13H, s, $H_3$)

(2) Preparation of Reduced-SEBS (Re-SEBS)

(2-1) Preparation of Acylated-SEBS (Ac-SEBS)

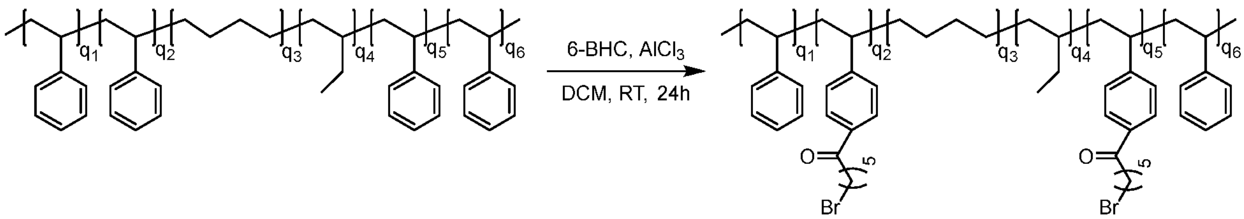


(In the scheme, the sum of $q_1$, $q_2$, $q_5$, and $q_6$ is 711, the sum of $q_3$ and $q_4$ is 996, and the ratio of ($q_1$ + $q_6$) to the total of $q_1$, $q_2$, $q_5$, $q_6$ is 0.3.)

A two-neck round-bottom flask equipped with a dropping funnel was charged with 5 g (1 eq styrene) of poly(styrene-b-ethylene-co-butylene-b-styrene) (SEBS, Kraton A1535H) and 150 mL of dichloromethane (30 mL per 1 g polymer). The polymer was dissolved completely to give a polymer solution.

Separately, 2.74 g (0.75 eq) of aluminum chloride and 3.14 mL (0.75 eq) of 6-bromohexanoyl chloride were dissolved in 50 mL of dichloromethane to form a mixed solution, which was placed in the dropping funnel. Over a period of at least two hours (for 80 mL total), it was added dropwise to the stirred polymer solution. After the addition was complete, the reaction was stirred at room temperature for 24 hours.

At the end of the reaction, 800 mL of ethanol was added to precipitate the polymer. The precipitated polymer was washed with ethanol twice and then dried in a vacuum oven at room temperature for 12 hours. $^1$H-NMR and IR analyses (FIG. 6) confirmed that 69 mol% of the styrene units in SEBS were acylated, yielding Ac-SEBS.

$^1H$ NMR(400MHz, $CDCl_3$) δ 7.96-7.40 (1.98H, broad peak, $H_{6',7'}$), 7.25-6.30 (4.75H, broad peak, $H_{6-10}$), 3.53-3.38 (2.00H,

t, $H_1$), 3.07-2.79 (1.99H, broad peak, $H_{5,12'}$), 2.73-2.32 (0.61 H, broad peak, $H_{12}$), 2.05-0.48 ($H_{2-4,11,13-18}$)

(2-2) Preparation of Reduced-SEBS (Re-SEBS)

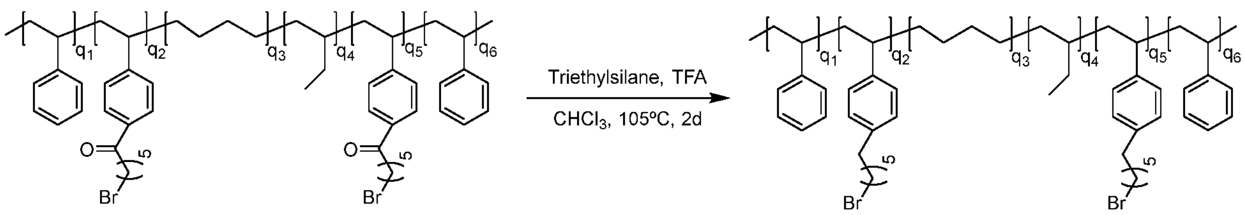


(In the scheme, the sum of $q_1$, $q_2$, $q_5$, and $q_6$ is 711, the sum of $q_3$ and $q_4$ is 996, and the ratio of ($q_1$ + $q_6$) to the total of $q_1$, $q_2$, $q_5$, $q_6$ is 0.3.)

A two-neck round-bottom flask was charged with 5 g (1 eq Br group) of the Ac-SEBS prepared in step (3) and 125 mL of chloroform (25 mL per 1 g polymer) to dissolve the polymer.

After confirming complete dissolution, 18.83 mL (10 eq) of triethylsilane was added, followed by 45.11 mL (50 eq) of trifluoroacetic acid (TFA). A reflux condenser was attached to the flask, which was heated to 105°C and stirred for 48 hours.

After completion of the reaction, the mixture was cooled to room temperature, 150 mL of 1 M KOH was added, and it was stirred at 500 rpm for 30 minutes. Then, the reaction mixture was separated in a separating funnel. The lower (chloroform) layer was collected and precipitated in 800 mL of methanol. The precipitated polymer was washed four times with methanol, and the washed polymer was dried for 24 hours under vacuum at room temperature. 1H-NMR and IR analyses confirmed that the carbonyl group was fully reduced (FIGS. 7 and 8).

$^1$H NMR(400MHz, DMSO-d6) δ 7.23-6.22 (6.71H, broad peak, $H_{6-10}$), 3.48-3.33 (2H, t, $H_1$), 2.68-2.28 (2.61H, broad peak, $H_{5'}$), 2.00-0.60 (30.19H, broad peak, H2-5,11,13-18)

(3) Preparation of Crosslinked Polymer (PPO-SEBS)

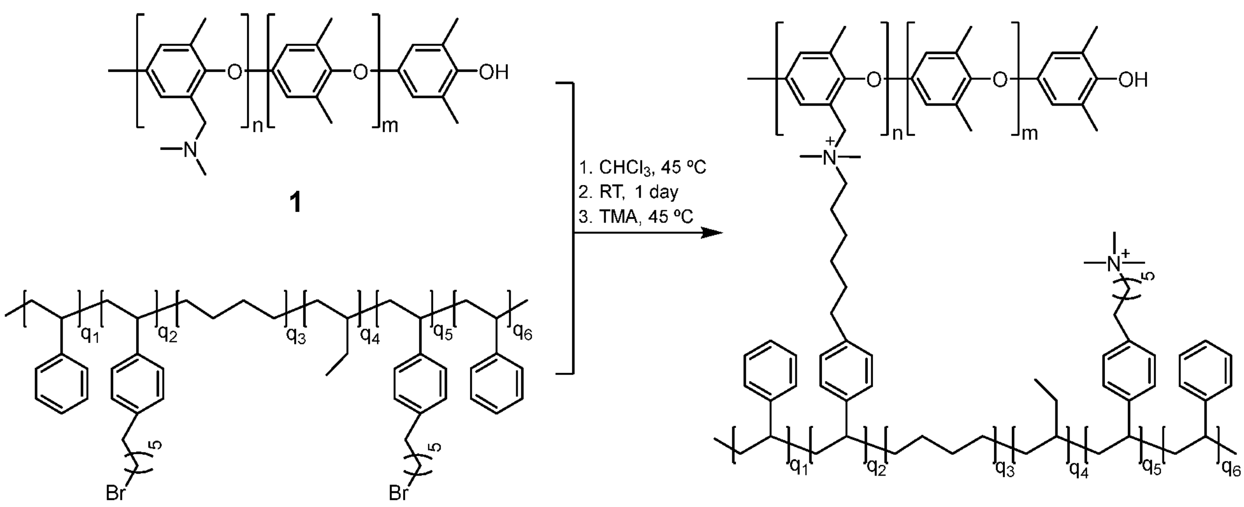


1

2

PPO-SEBS

(In the scheme, the sum of $q_1$, $q_2$, $q_5$, and $q_6$ is 711, the sum of $q_3$ and $q_4$ is 996, and the ratio of ($q_1$ + $q_6$) to the total of $q_1$, $q_2$, $q_5$, $q_6$ is 0.3.)

Fifty mol of DMA-PPO (1), prepared in step (1), per 100 mol of Br in the Re-SEBS (2), prepared in step (2), were introduced into 20 mL of chloroform. The mixture was stirred at 45°C for 12 hours. After 12 hours, the fully dissolved polymer solution was dried at room temperature for 24 hours, and the resulting precipitate was washed in distilled water for 3 hours. The washed precipitate was then placed in a 30 wt% aqueous trimethylamine solution at 45°C for 24 hours to substitute any remaining Br groups with quaternary ammonium groups, yielding the PPO-SEBS 1 copolymer.

(4) Preparation of Polymer Membrane

A PPO-SEBS copolymer solution was obtained by dissolving the PPO-SEBS copolymer in chloroform, which was then poured into a clean petri dish and dried at room temperature for 24 hours to form a PPO-SEBS polymer membrane. The membrane was peeled off the petri dish, washed three or four times in distilled water, and dried at room temperature, yielding a PPO-SEBS polymer membrane 50 μm thick (FIG. 1).

**Example 2: Preparation of PPO-SEBS (50% Funct.)**

Except that, in step (2-1), 0.55 equivalents of aluminum chloride and 0.55 equivalents of 6-bromohexanoyl chloride per 1 equivalent of styrene in SEBS were used so that 50 wt% of the styrene portion was acylated, the PPO-SEBS was prepared in the same manner as Example 1.

**Comparative Example 1: Preparation of DA-x30-PPO-SEBS**

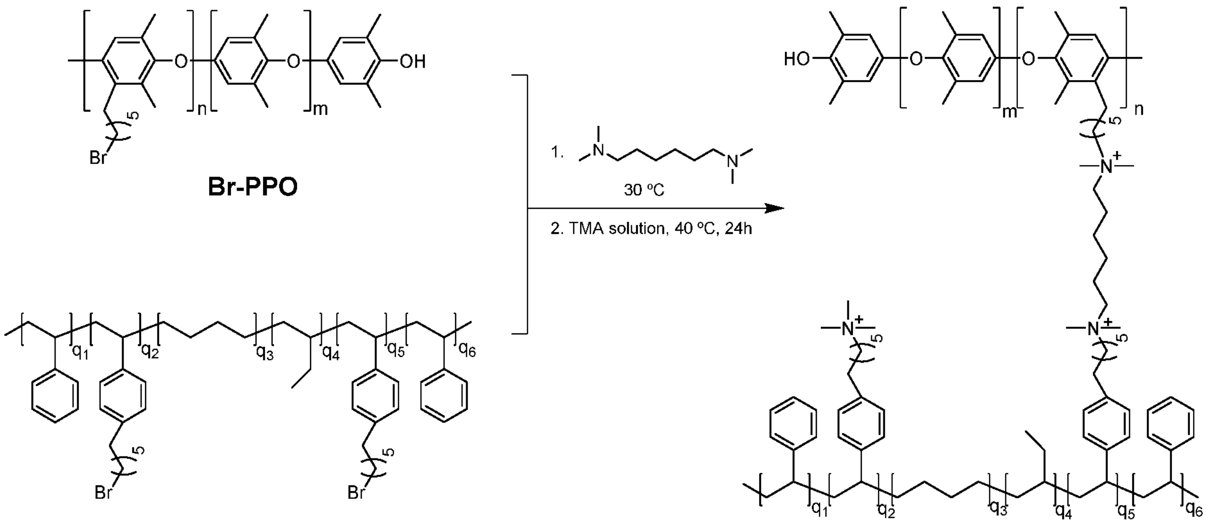


Br-PPO

Re-SEBS

DA-x30-PPO-SEBS

(In the scheme, n is 33, m is 34, the sum of $q_1$, $q_2$, $q_5$, and $q_6$ is 711, the sum of $q_3$ and $q_4$ is 996, and the ratio of ($q_1$ + $q_6$) to the total of $q_1$, $q_2$, $q_5$, $q_6$ is 0.3.)

Into 100 mL of the crosslinker N,N,N',N'-tetramethyl-1,6-hexanediamine, the Re-SEBS obtained in step (2) of Example 1 and the Br-PPO obtained in step (1-1) of Example 1 were added. Per 100 mol of Br in Re-SEBS, 30 mol of Br-PPO were added, and the mixture was stirred at 30°C for 12 hours. After 12 hours, the completely dissolved polymer solution was dried at room temperature for 24 hours, and the resulting precipitate was washed in distilled water for 3 hours. The washed precipitate was then placed in a 30 wt% aqueous trimethylamine solution at 40°C for 24 hours to convert remaining Br groups into quaternary ammonium groups, preparing DA-x30-PPO-SEBS 1 copolymer.

Using this DA-x30-PPO-SEBS 1 copolymer, a DA-x30-PPO-SEBS 1 polymer membrane 20 μm in thickness (FIG. 2) was obtained in the same manner as step (4) of Example 1.

**Comparative Example 2: Preparation of DA-x30-PPO-SEBS**

A DA-x30-PPO-SEBS 2 polymer membrane was prepared in the same manner as Comparative Example 1.

**Comparative Example 3: Preparation of xTQA-SEBS (70% Funct.)**

Preparation of Cli-PPO

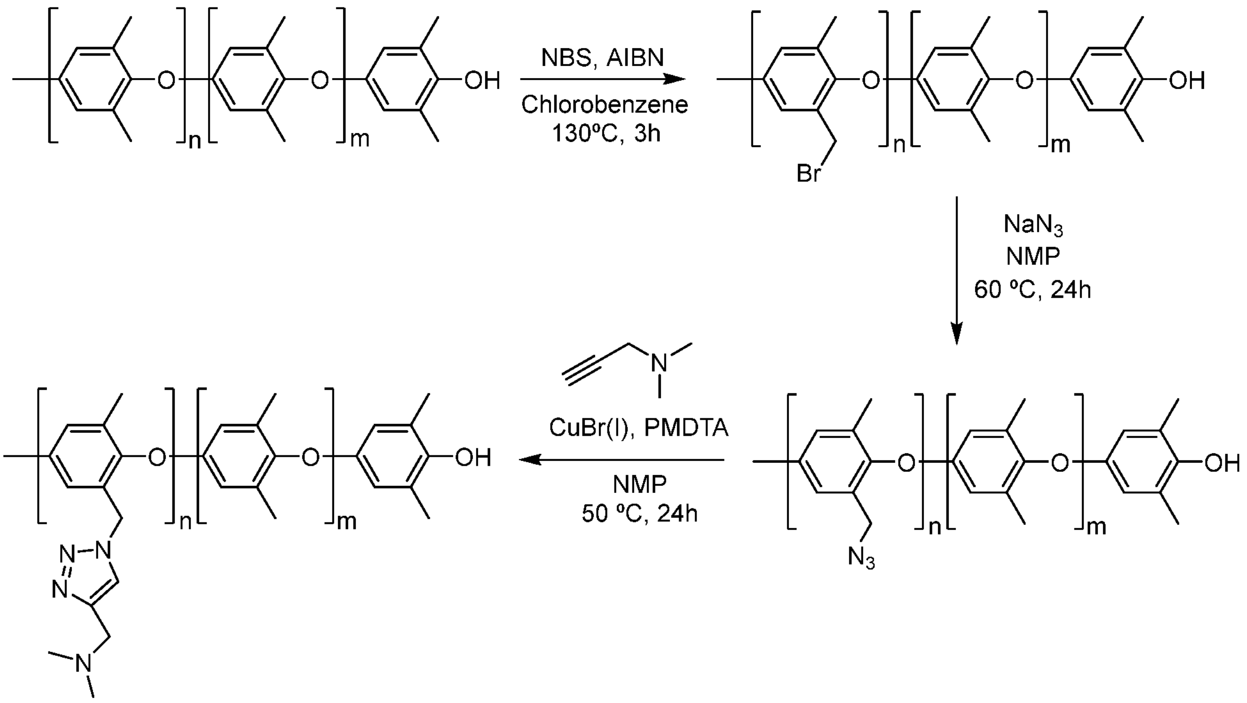


(In the scheme, n is 33, m is 34.)

(1-1) Preparation of Brominated PPO (Br-PPO) 3

A two-neck round-bottom flask equipped with a reflux condenser was charged with 3 g of poly(2,6-dimethyl-1,4-phenylene oxide) (PPO) and 36 mL of chlorobenzene. The mixture was stirred until the polymer dissolved completely. Next, 2.7 g of N-bromosuccinimide (NBS) and 123 mg of azobisisobutyronitrile (AIBN) were added to the polymer solution. The mixture was stirred at 130°C for 4 hours. After the reaction was complete, the mixture was precipitated in methanol. The precipitated polymer was washed about four times with methanol, recovered by vacuum filtration, and dried in a vacuum oven at 80°C. From 1H-NMR, it was confirmed that 32.9 wt% of the PPO had been brominated to yield Br-PPO.
$^1$H NMR(400MHz, $CDCl_3$) δ 6.76-6.42 (33H, t, $H_1$), 6.58-6.44 (67H, d, $H_2$), 4.41-4.30 (35H, s, $H_3$), 2.16-2.04 (220H, s, $H_4$)

(1-2) Preparation of $N_3$-PPO via Azidation

In order to introduce the azide group, a functional group for a click reaction, into PPO, 3.5 g (8 mmol) of the Br-PPO from above was dissolved completely in 30 mL of N-methyl-2-pyrrolidone (NMP) in a one-neck round-bottom flask. Then, 2.5 g (39 mmol) of sodium azide was added at 60°C and the mixture was stirred for 24 hours. After 24 hours, the reaction mixture was precipitated in methanol; the precipitated polymer was washed about three or four times with methanol. The polymer was separated by vacuum filtration and dried in a vacuum oven at 80°C. From $^1$H-NMR and IR analyses, it was confirmed that the bromine of Br-PPO was fully converted into azide groups, thus yielding N3-PPO.
$^1$H NMR(400MHz, $CDCl_3$)δ 6.68-6.63 (18H, broad peak, $H_{3'}$), 6.49 (36H, broad peak, $H_3$), 4.22 (20H, s, $H_2$), 2.10 (135H, broad peak, $H_1$)

(1-3) Preparation of Cli-PPO by Click Reaction

To introduce the tertiary amine group and a triazole group, which can form hydrogen bonds, into the PPO polymer so that it can react with SEBS, 1 g (2.4 mmol) of dried N3-PPO was dissolved in 7 mL of NMP in a Schlenk flask. Then, 0.381 mL (1.8 mmol) of N,N,N',N",N"-pentamethyldiethylenetriamine (PMDTA), 131 mg (0.9 mmol) of copper(I) bromide, and 0.393 mL (3.65 mmol) of 3-dimethylamino-1-propyne were added. Oxygen was removed from the flask by three to four freeze-pump-thaw cycles. The mixture was stirred at 50°C for 24 hours. After completion, the reaction mixture was precipitated in a mixture of water and methanol at a 3:1 ratio, and the precipitated polymer was washed three or four times with the same water-methanol mixture. The washed polymer was separated by vacuum filtration and dried in a vacuum oven at 80°C. 1H-NMR and IR analyses confirmed that the azide groups of N3-PPO were fully reacted to yield a triazole group and a tertiary amine group, thereby obtaining Cli-PPO.
$^1$H NMR(400MHz, $CDCl_3$) δ 7.53-7.49 (10H, broad peak, $H_4$), 6.64 (10H, broad peak, $H_{3'}$), 6.48 (36H, broad peak, $H_3$), 5.37

(20H, broad peak, $H_2$), 3.60 (20H, broad peak, $H_5$), 2.27 (58H, broad peak, $H_6$), 2.10 (114H, broad peak, $H_1$)

(2) Preparation of Reduced-SEBS (Re-SEBS)

Re-SEBS was prepared in the same manner as step (2) of Example 1.

(3) Synthesis of xTQA-PPO-SEBS Copolymer

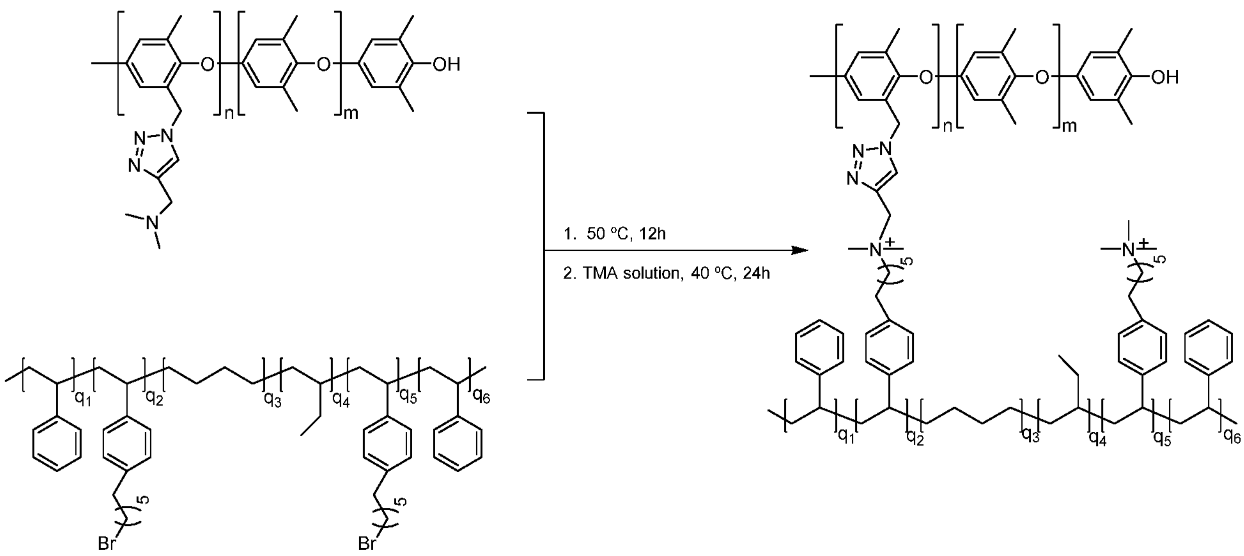


(In Reaction Scheme 3, n is 33, m is 34, the sum of $q_1$, $q_2$, $q_5$, and $q_6$ is 711, the sum of $q_3$ and $q_4$ is 996, and the ratio of ($q_1$ + $q_6$) to the total of $q_1$, $q_2$, $q_5$, $q_6$ is 0.3.)

In 15 mL of chloroform, the Cli-PPO produced in step (1) and the Re-SEBS produced in step (2) were dissolved such that 50 mol of Cli-PPO per 100 mol of Br groups in the Re-SEBS were added, and stirred at 50°C for 12 hours. After 12 hours, the fully dissolved polymer solution was dried at room temperature for 24 hours, and the precipitate was washed with distilled water for 3 hours. The washed precipitate was then placed in a 30 wt% aqueous trimethylamine solution at 40°C for 24 hours to convert the remaining Br groups into quaternary ammonium groups, yielding xTQA-PPO-SEBS copolymer.

(4) Preparation of Polymer Membrane

A solution of xTQA-PPO-SEBS copolymer in chloroform was poured into a clean petri dish and dried at room temperature for 24 hours to form an xTQA-PPO-SEBS polymer membrane. The membrane was peeled off the petri dish, washed four times with distilled water, and dried at room temperature, yielding an xTQA-PPO-SEBS polymer membrane with a thickness of 40 μm.

**Experimental Example 1: Evaluation of Ion Exchange Capacity, Hydroxide Ion Conductivity, Water Content, and Swelling Ratio**

**(1) Ion Exchange Capacity (IEC) Measurement**

a. Experimental IEC

For hydroxide ion ($OH^-$) exchange, a square polymer membrane sample (1 cm × 1 cm) was immersed in 1 M KOH solution at 20°C for 24 hours. Next, the surface of the polymer membrane was blotted dry, and the membrane was placed in 10 mL of 0.01 M HCl solution for 24 hours. Then, 3 drops of 1 wt% phenolphthalein indicator solution were added, and the sample was titrated with 0.01 M NaOH standard solution.

The experimental IEC value was calculated using Equation (1) below. Each sample was measured three times, and the average was calculated.

[Equation 1]

$$IEC\ (meq/g) = (V_{0NaOH}\ C_{NaOH} - V_{xNaOH}\ C_{NaOH})/W_{dry}$$

where $V_{0NaO}$ is the volume of NaOH before titration, $V_{xNaOH}$ is the volumes of NaOH consumed in titration, $C_{NaOH}$ is the molar concentration of NaOH determined by titration with an oxalic-acid standard solution, and $W_{dry}$ is the weight of the dried membrane.

b. Theoretical IEC

The theoretical IEC was calculated by multiplying the total molecular weight of the entire block copolymer by the degree of functionalization.

**(2) Hydroxide Ion Conductivity (OH- Conductivity) Measurement**

A rectangular membrane sample (1 cm × 4 cm) was immersed in water at 20°C, 40°C, 60°C, or 80°C, and the in-plane hydroxide ion conductivity (σ) was determined by Equation (2) below. Conductivity was measured at least three times at consistent time intervals, and the average value was taken.

[Equation 2]

$$\sigma = L/RWd$$

where L is the distance between the reference electrodes (1 cm), R is the resistance, W is the width of the membrane (1 cm), and d is the thickness (cm) of the membrane.

The ohmic resistance (R) was measured using four-probe AC impedance spectroscopy at frequencies of 10-200 kHz, with a frequency/gain-phase analyzer (SI-1260) and an electrochemical interface (SI-1287). To minimize unwanted carbonate formation, the cell was fully immersed in degassed deionized water, and impedance spectra were taken quickly.

**(3) Water Content (Water Uptake, WU) and Swelling Ratio (SR) Measurement**

To exchange the membrane to the $OH^-$ form, two circular membrane samples with diameter 2.23 cm were immersed in 1 M KOH solution at 20°C for 24 hours.

Each polymer membrane sample was then rinsed with deionized water to remove KOH. One sample was immersed in deionized water at 20°C, and the other in deionized water at 80°C, each for 1 hour. Then each was taken out, the surface was lightly blotted, and the thickness ($t_{wet}$), diameter ($l_{wet}$), and weight ($W_{wet}$ t) were measured immediately.

Next, each sample was dried in an oven at 40°C for 24 hours, and the thickness ($t_{dry}$), diameter ($l_{dry}$), and weight ($W_{dry}$) were measured.

Based on the changes in weight, water content (WU) was calculated according to Equation (3) below. From changes in thickness and diameter, the swelling ratios ($\triangle t$ and $\triangle l$)were calculated according to Equations (4) and (5):

[Equation 3]

$$WU\ (\%) = [(W_{wet} - W_{dry})/W_{dry}] \times 100$$

[Equation 4]

$$\triangle t\ (\%) = [(t_{wet} - t_{dry})/t_{dry}] \times 100$$

[Equation 5]

$$\triangle l\ (\%) = [(l_{wet} - l_{dry})/l_{dry}] \times 100$$

**<Evaluation of Theoretical Ion Exchange Capacity (IEC) and Hydroxide Ion Conductivity for DA-x30-PPO-SEBS Copolymer>**

The theoretical IEC and the hydroxide ion conductivity of the DA-x30-PPO-SEBS polymer membranes prepared in Comparative Examples 1 and 2 were measured, as shown in Table 1.

FIG. 2 is a photograph of the DA-x30-PPO-SEBS polymer membrane produced in Comparative Example 1. From FIG. 2, one can observe phase separation with a clearly visible uneven surface in part of the polymer membrane.

[Table 1]

| | Theoritical IEC (meq/g) | $OH^-$ ion conductivity at various temperature (mS/cm) | | | |
|---|---|---|---|---|---|
| | | 20 °C | 40 °C | 60 °C | 80 °C |
| Comparative Example 1 (DA-x30-PPO-SEBS 1) | 1.62 | 36.6 | 39.9 | 57.8 | 79.2 |
| Comparative Example 2 (DA-x30-PPO-SEBS 2) | | 52.1 | 60.1 | 77.8 | 81.6 |

From Table 1, although Comparative Examples 1 and 2 were prepared by the same method, the hydroxide ion conductivity at each temperature varied beyond the margin of error, indicating a lack of reproducibility. This arises because when a diamine or dihalide crosslinker crosslinks two different polymers, the reactivity at each reaction site is the same, so the reactions occur randomly, and crosslinking can occur between SEBS polymers themselves or between PPO polymers themselves. As a result, the membrane undergoes phase separation, and data lacking reproducibility are obtained.

**<Evaluation of Ion Exchange Capacity, Hydroxide Ion Conductivity, Water Content, and Swelling Ratio for TQA-SEBS and PPO-SEBS>**

Ion exchange capacity, hydroxide ion conductivity, water content, and swelling ratio were measured for the TQA-SEBS polymer prepared in Comparative Example 3 and the PPO-SEBS polymer prepared in Example 1. The results are shown in Table 2 below.

[Table 2]

| | | Comparative Example 3 (TQA-SEBS, 70% Funct.) | Example 1 (PPO-SEBS, 70% Funct.) |
|---|---|---|---|
| IEC (meq/g) | Theoretical | 1.48 | 1.57 |
| | Experimental | 1.53 ±0.04 | 1.58 ±0.07 |
| OH- ion conductivity (mS/cm) | 20 °C | 50.22 ±0.04 | 51.64 ±0.04 |
| | 40 °C | 68.88 ±0.03 | 71.76 ±0.05 |
| | 60 °C | 88.34 ±0.21 | 93.37 ±0.24 |
| | 80 °C | 107.34 ±0.40 | 112.35 ±0.18 |
| Water Content (%) | 20 °C | 63.6 | 63.9 |
| | 80 °C | 86.4 | 91.1 |
| Swelling Ratio (%) | 20 °C($\Delta t$) | 29.2 | 34.1 |
| | 80 °C($\Delta t$) | 37.5 | 43.6 |
| | 20 °C($\Delta l$) | 9.1 | 13.6 |
| | 80 °C($\Delta l$) | 18.2 | 20.5 |

Referring to Table 2, PPO-SEBS from Example 1 has an outstanding ion exchange capacity, and significantly higher hydroxide ion conductivity and water content compared to TQA-SEBS from Comparative Example 3. In TQA-SEBS, hydrogen bonding of triazole groups is disrupted at high temperature, whereas PPO-SEBS does not have this problem, so PPO-SEBS displays a higher conductivity under the same composition conditions due to relatively higher IEC.

Thus, under the same acylation degree and crosslink density, PPO-SEBS is expected to deliver higher output performance than TQA-SEBS.

**Experimental Example 2: Measurement of Density and Hydrogen Permeability**

The density and hydrogen permeability of the TQA-SEBS polymer membrane from Comparative Example 3 and the PPO-SEBS polymer membrane from Example 1 were measured by the methods below, and the results are shown in Table 3.

(1) Density

For density measurement, a rectangular membrane sample (2 cm × 2 cm) was dried in a vacuum oven at 40°C for 24 hours. Then, using buoyancy-based density measurement, the weight in air (Wair) and the weight in n-heptane (density = 0.684 g) (Whep) were measured. The density was calculated from Equation (6):

[Equation 6]

$$\text{Density (g/cm}^3\text{)} = [W_{air} / (W_{air} - W_{hep})] \times D_{hep}$$

(2) Hydrogen Permeability

Hydrogen permeability was measured with a custom-made bubble flowmeter. A circular membrane (area 19.6 cm2 (A), thickness 25 μm (l)) was dried in a vacuum oven at 40°C for 24 hours, mounted in a bubble flowmeter cell, with the internal pressure of the flowmeter fixed at 150 cmHg (P), and hydrogen introduced at 200 sccm. By monitoring the volumetric displacement of bubbles per unit time (Vp/s) inside the bubble flowmeter, the hydrogen permeability was determined. Hydrogen permeability was calculated by Equation (7):

[Equation 7]

$$\text{Permeability (barrer)} = 10^{-10} \times (V_{p(STP)} \times l) / (A \times s \times P)$$

[Table 3]

| | Density (g/cm$^3$) | Hydrogen Permeability (Barrer) |
|---|---|---|
| Example 1 (PPO-SEBS) | 1.147 ±0.018 | 25.532 ± 0.276 |
| Comparative Example 3 (TQA-SEBS) | 1.107 ± 0.030 | 32.386 ± 0.211 |

From Table 3, PPO-SEBS from Example 1 has higher density and lower hydrogen permeability than TQA-SEBS from Comparative Example 3, demonstrating that it is more suitable as an ion exchange membrane for water electrolysis aimed at preparing high-purity hydrogen and oxygen.

**Experimental Example 3: Thermal Stability Measurement**

Thermal stability of the TQA-SEBS polymer membrane from Comparative Example 3 and the PPO-SEBS polymer membrane from Example 1 was measured by thermogravimetric analysis (TGA), and the results are shown in FIG. 9.

Thermal stability was measured using a Scinco TGA N-1000 device. Specifically, the mass loss was measured in the temperature range of 30°C to 800°C with a heating rate of 10°C/min under nitrogen gas.

From FIG. 9, PPO-SEBS from Example 1 exhibits thermal stability at a level equivalent to TQA-SEBS, and remains thermally stable under the operating conditions (below 80°C) of water electrolysis equipment, confirming its suitability as an ion exchange membrane for water electrolysis.

**Experimental Example 4: Oxidation Stability Measurement**

Oxidation stability of the TQA-SEBS polymer membrane from Comparative Example 3 and the PPO-SEBS polymer membrane from Example 1 was measured by the following method, and the results are shown in FIG. 10.

For oxidation stability, each membrane was dried in a vacuum oven at 40°C for 24 hours, and its initial weight

(WBefore) was measured. Then, each membrane was immersed in Fenton's reagent (4 ppm Fe2+ in 3 wt% H2O2) at 60°C, and every 24 hours, its weight (WAfter) was measured. The weight loss was calculated by Equation (8):

[Equation 8]

$$\text{Oxidation Stability (\%)} = [(W_{Before} - W_{After}) / W_{Before}] \times 100\ (\%)$$

Referring to FIG. 10, PPO-SEBS from Example 1 shows superior oxidation stability compared to TQA-SEBS. Hence, the polymer membrane of the subject disclosure demonstrates excellent durability even under conditions where radicals form, confirming its suitability for use in water electrolysis devices.

**Experimental Example 5: Mechanical Properties Measurement**

Mechanical stability of the PPO-SEBS polymer membrane produced in Example 1 was measured by the following method, and the results are shown in FIG. 11.

Mechanical stability was measured using a Shimadzu EZ-TEST E2-L Benchtop tensile tester. Test specimens in the shape of a dumbbell, measuring 1 cm × 4 cm in overall size and 1 cm × 2 cm in the test section, were prepared in the OH-form under 50% RH conditions. The tensile test was conducted at 10 mm/min.

As a result, the tensile strength was measured as 27.1 MPa, the elongation at break was 129.5%, and the Young's modulus was 275.5 MPa.

From these results, it is confirmed that the PPO-SEBS polymer membrane of the subject disclosure provides sufficient mechanical strength for use as an anion exchange membrane, and in particular exhibits significantly improved elongation compared to conventional anion exchange membranes.

## Claims

1. A crosslinked copolymer comprising a first chain, represented by the following Chemical Formula 1, and a second chain, represented by the following Chemical Formula 2, wherein the first chain and second chain are crosslinked with each other:

[Chemical Formula 1]

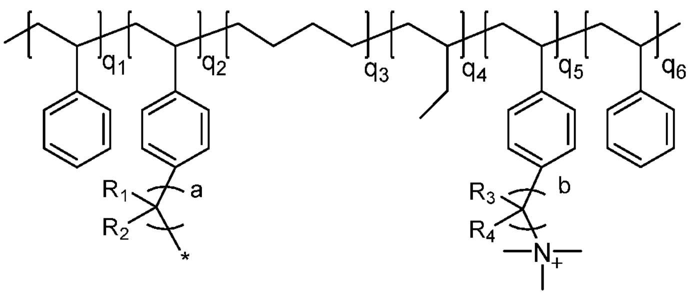

in Chemical Formula 1,

* represents the bonding position with Chemical Formula 2,
a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10,
$R_1$ to $R_4$ are each independently hydrogen or $-(CH_2)_p-CH_3$, where p is an integer of 0 to 5;

[Chemical Formula 2]

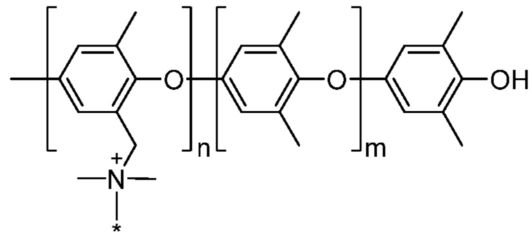

in Chemical Formula 2,

* represents the bonding position with Chemical Formula 1,
n and m are each independently an integer of 10 to 50.

2. The crosslinked copolymer of Claim 1,
wherein 10 to 70 mol of the second chain is included based on 100 mol of the first chain.

3. The crosslinked copolymer of Claim 1 or 2,
wherein $q_1$ to $q_6$ are each independently an integer of 10 to 500.

4. The crosslinked copolymer of any one of Claims 1 to 3,
wherein the ratio of the sum of $q_1$, $q_2$, $q_5$, and $q_6$ to the total sum of $q_1$ to $q_6$ is 0.2 to 0.5.

5. The crosslinked copolymer of any one of Claims 1 to 4,
wherein the ratio of the sum of $q_1$ and $q_6$ to the total sum of $q_1$, $q_2$, $q_5$, and $q_6$ is 0.2 to 0.5.

6. The crosslinked copolymer of any one of Claims 1 to 5,
wherein a and b are each independently an integer of 4 to 6.

7. The crosslinked copolymer of any one of Claims 1 to 6,
wherein the ratio of n to (n + m) is 0.15 to 0.70.

8. The crosslinked copolymer of any one of Claims 1 to 7,

wherein the crosslinked copolymer is represented by the following Chemical Formula 3:

[Chemical Formula 3]

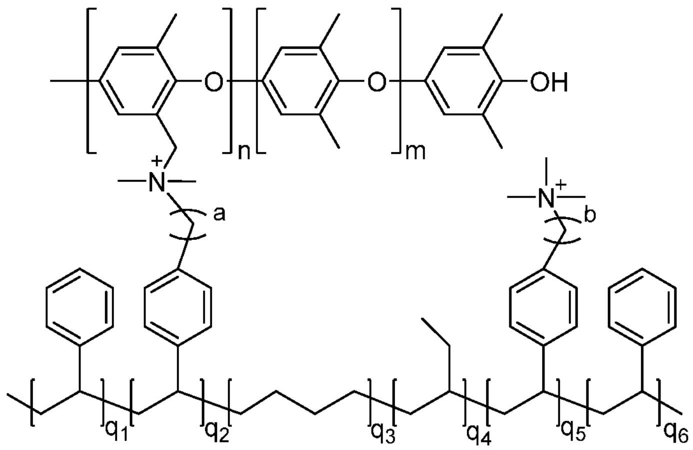

In Chemical Formula 3, $q_1$ to $q_6$, a, b, n, and m are as defined in Chemical Formulae 1 and 2.

**9.** A polymer membrane comprising the crosslinked copolymer of any one of Claims 1 to 8.

**10.** An anion exchange membrane for water electrolysis, comprising the polymer membrane of Claim 9.

**11.** A method for preparing a crosslinked copolymer, comprising:

(a) preparing a poly(styrene-b-ethylene-co-butylene-b-styrene) polymer represented by Chemical Formula 1-1 below,
(b) preparing a polyphenylene oxide-based polymer represented by Chemical Formula 2-1 below, and
(c) crosslinking the poly(styrene-b-ethylene-co-butylene-b-styrene) polymer and the polyphenylene oxide-based polymer to produce the crosslinked copolymer:

[Chemical Formula 1-1]

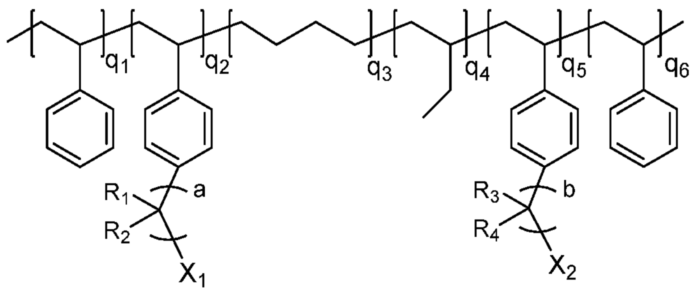

In Chemical Formula 1-1,

a sum of $q_1$, $q_2$, $q_5$, and $q_6$ is an integer of 100 to 1,000,
a sum of $q_3$ and $q_4$ is an integer of 150 to 2,000,
a and b are each independently an integer of 3 to 10,
$R_1$ to $R_4$ are each independently hydrogen or $-(CH_2)_p-CH_3$ (p is an integer of 0 to 5), and
$X_1$ and $X_2$ are each independently a halogen group;

[Chemical Formula 2-1]

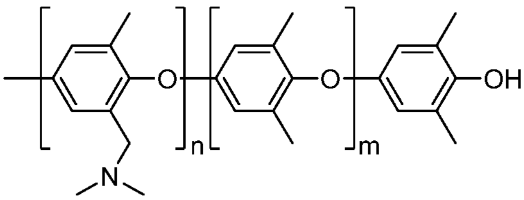

In Chemical Formula 2-1,
n and m are each independently an integer of 10 to 50.

**12.** The method of preparing a crosslinked copolymer of Claim 11, further comprising (d) reacting the crosslinked copolymer with trimethylamine.

**13.** The method of preparing a crosslinked copolymer of Claim 11 or 12, wherein the poly(styrene-b-ethylene-co-butylene-b-styrene) polymer comprises 30 to 90 mol of halogen atom based on 100 mol of styrene repeat units.

**14.** The method of preparing a crosslinked copolymer of any one of Claims 11 to 13, wherein in step (c), the polyphenylene oxide-based polymer is used at 10 to 70 mol based on 100 mol of halogen groups contained in the poly(styrene-b-ethylene-co-butylene-b-styrene) polymer.

[Fig. 1]

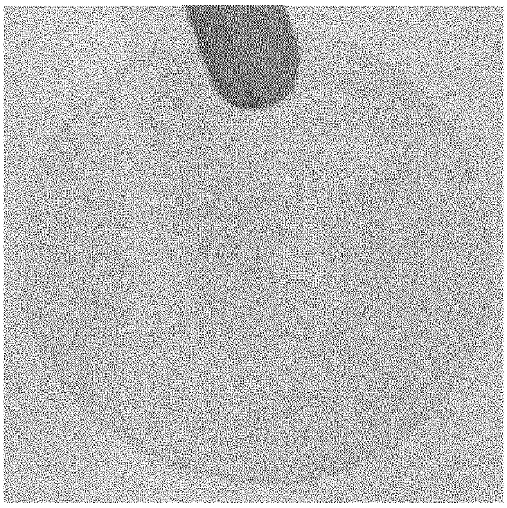

[Fig. 2]

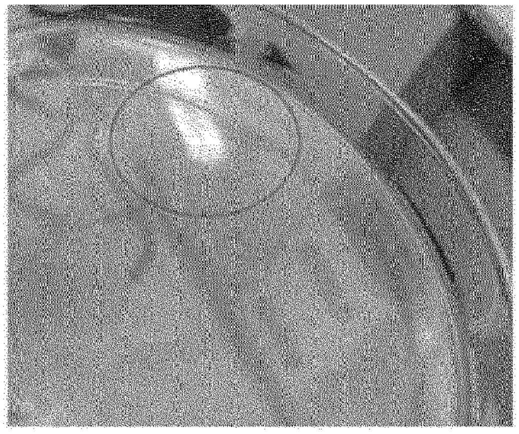

[Fig. 3a]

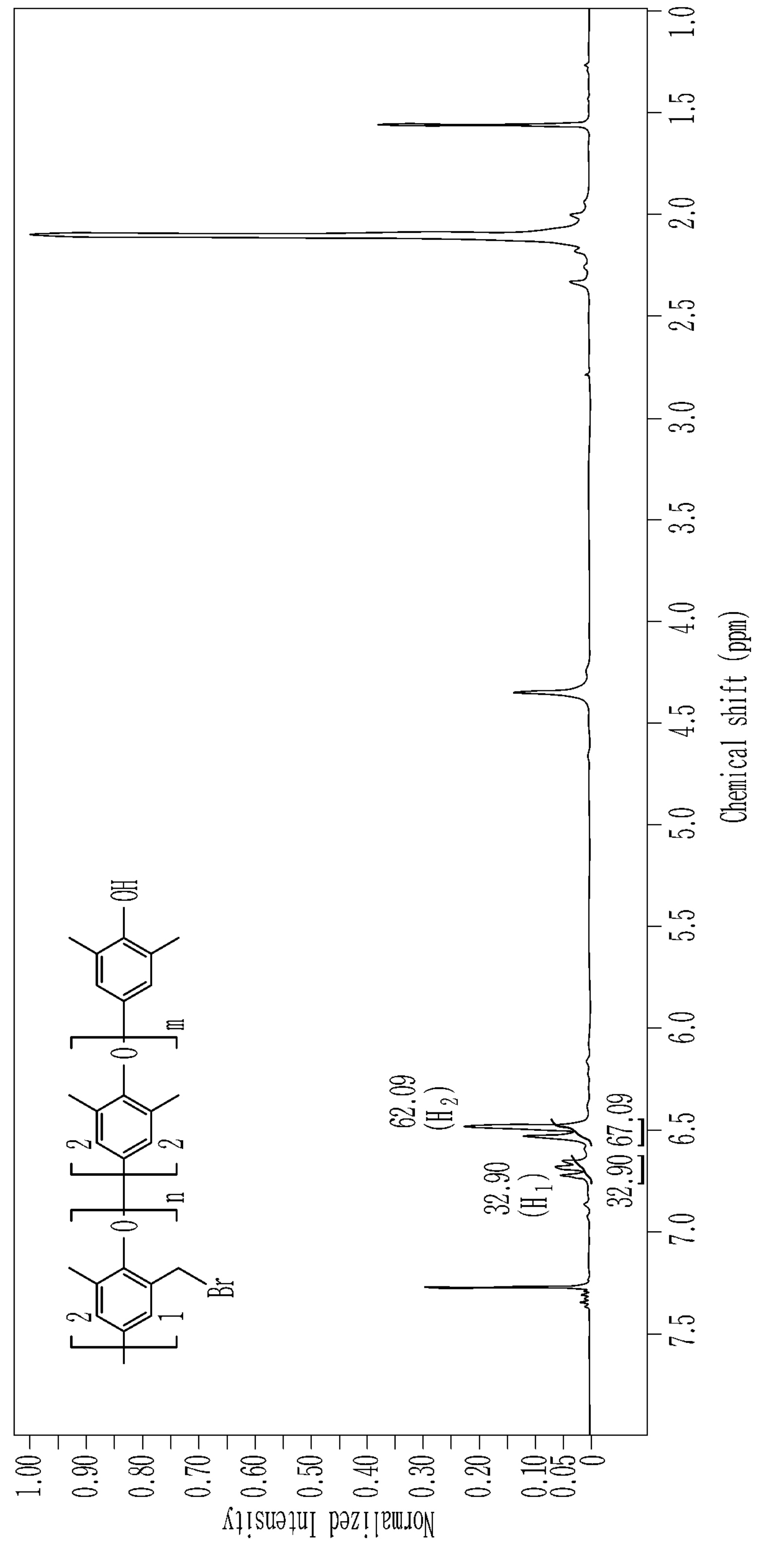

Normalized Intensity
Chemical shift (ppm)
62.09
($H_2$)
32.90
($H_1$)
32.90 67.09

[Fig. 3b]

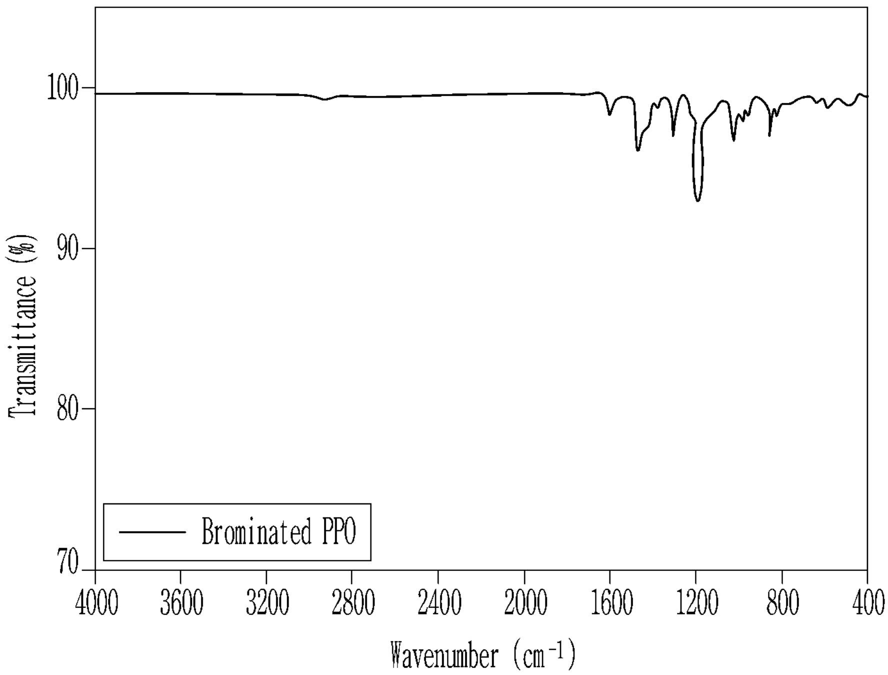
100
90
80
70
Transmittance (%)
4000
3600
3200
2800
2400
2000
1600
1200
800
400
Wavenumber (cm-1)
Brominated PPO

[Fig. 4a]

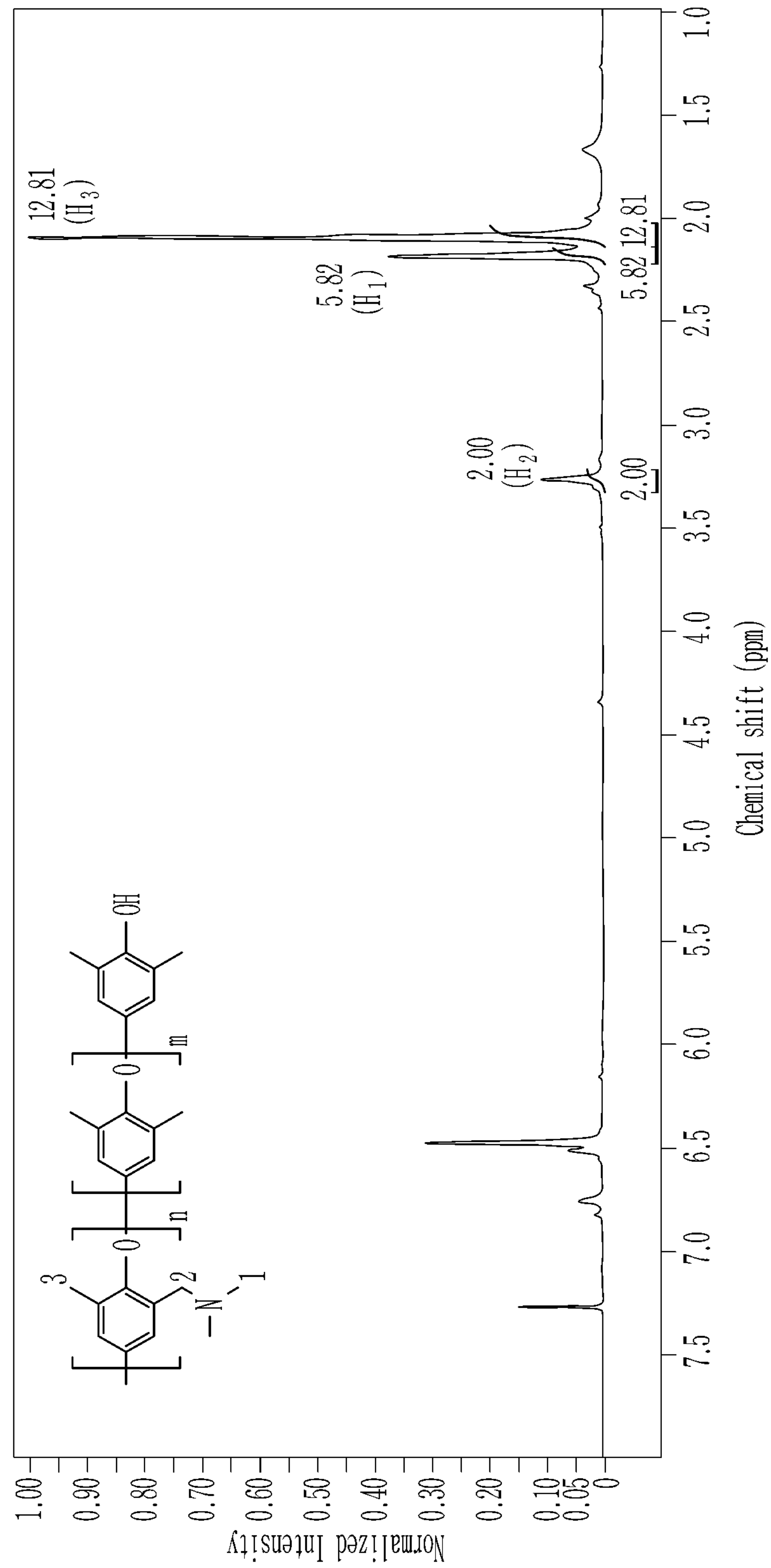
12.81
($H_3$)
5.82
($H_1$)
2.00
($H_2$)
5.82 12.81
2.00
Chemical shift (ppm)
Normalized Intensity

[Fig. 4b]

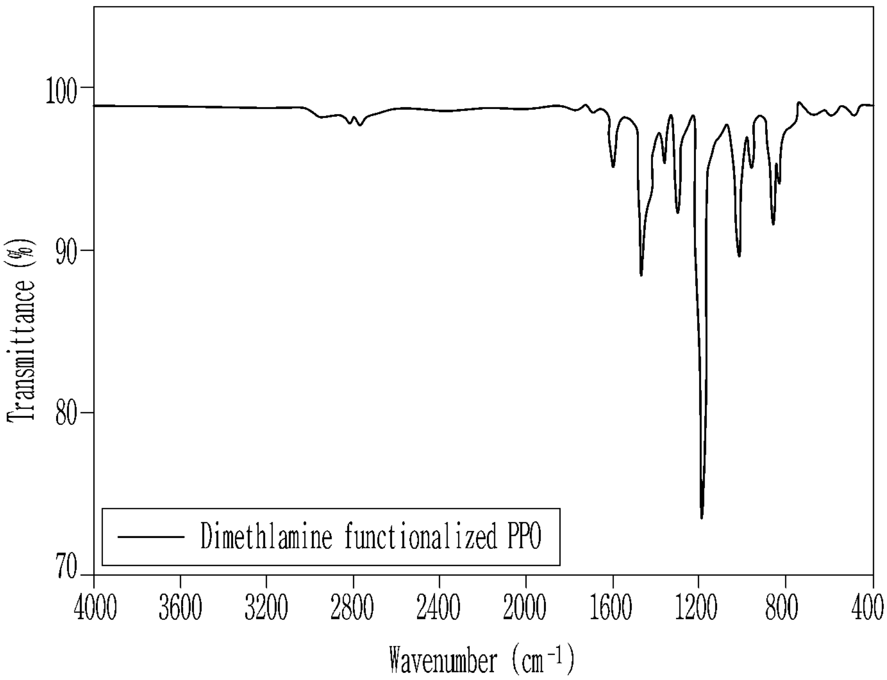
100
90
80
70
Transmittance (%)
4000
3600
3200
2800
2400
2000
1600
1200
800
400
Wavenumber (cm-1)
Dimethlamine functionalized PPO

[Fig. 5]

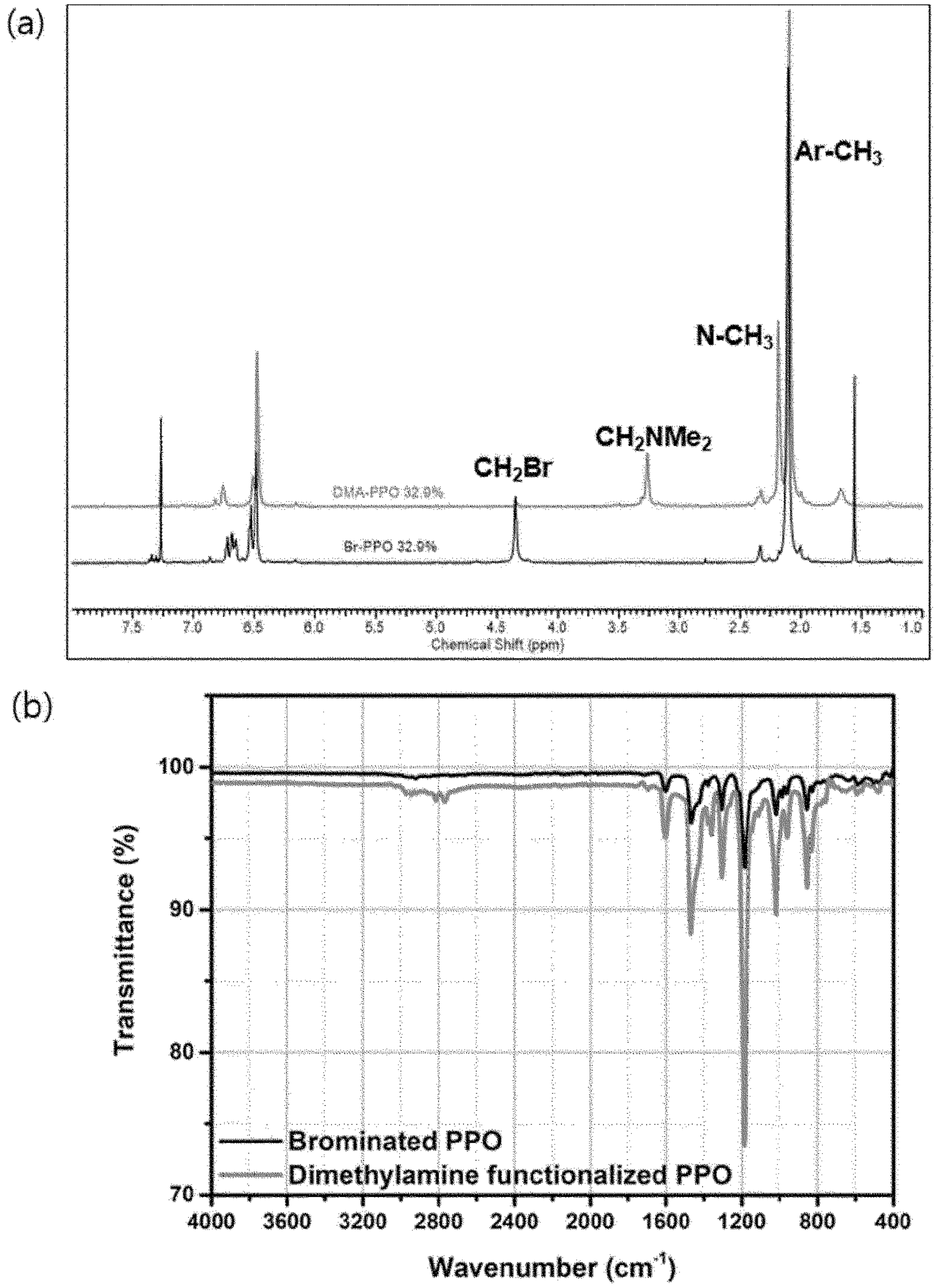
(a)
Ar-CH3
N-CH3
CH2NMe2
CH2Br
DMA-PPO 32.9%
Br-PPO 32.9%
7.5 7.0 6.5 6.0 5.5 5.0 4.5 4.0 3.5 3.0 2.5 2.0 1.5 1.0
Chemical Shift (ppm)
(b)
Transmittance (%)
100
90
80
70
Brominated PPO
Dimethylamine functionalized PPO
4000 3600 3200 2800 2400 2000 1600 1200 800 400
Wavenumber (cm-1)

[Fig. 6a]

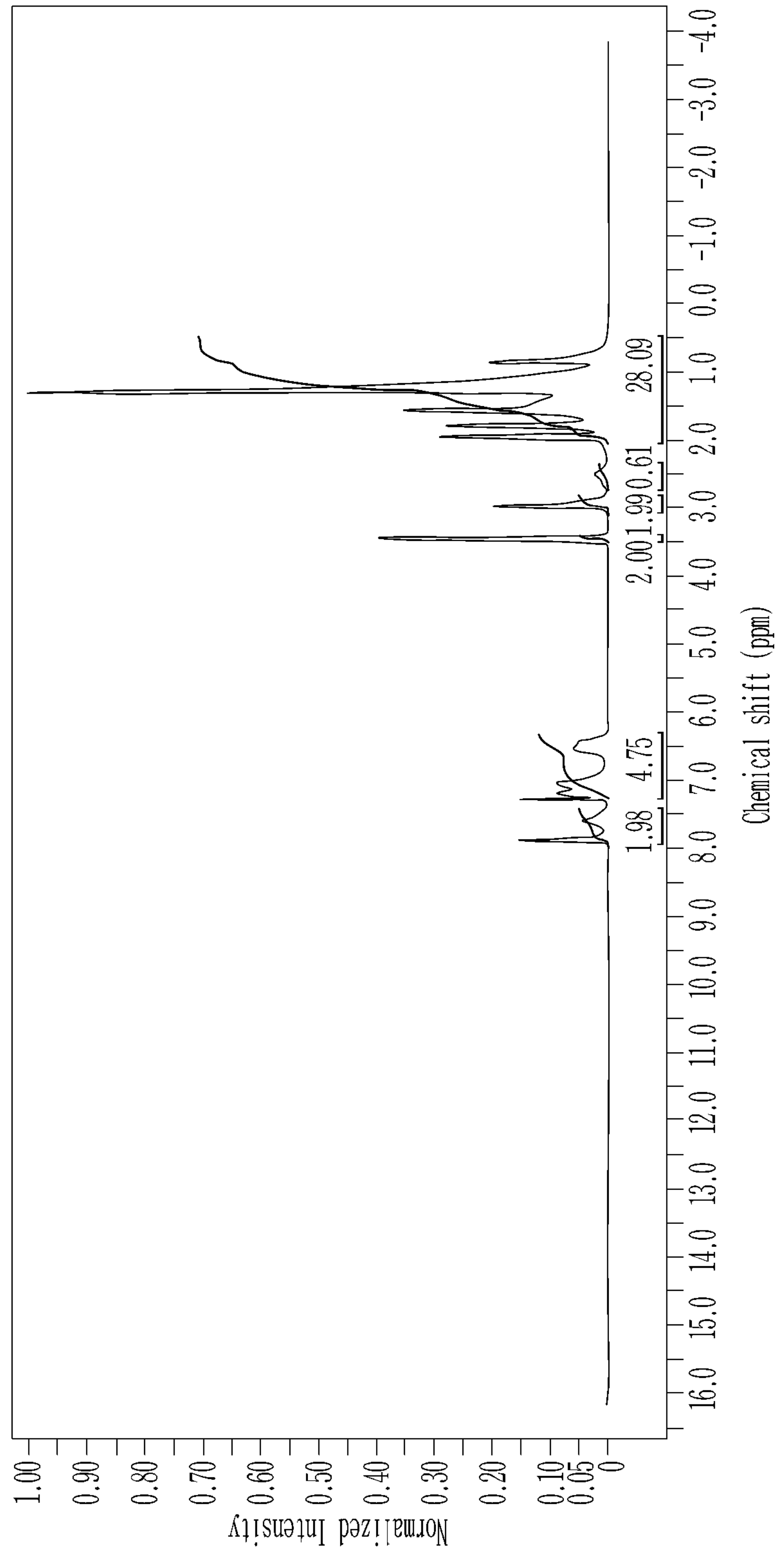
Chemical shift (ppm)
Normalized Intensity
28.09
2.00
1.99
0.61
4.75
1.98
16.0
15.0
14.0
13.0
12.0
11.0
10.0
9.0
8.0
7.0
6.0
5.0
4.0
3.0
2.0
1.0
0.0
-1.0
-2.0
-3.0
-4.0
1.00
0.90
0.80
0.70
0.60
0.50
0.40
0.30
0.20
0.10
0.05
0

[Fig. 6b]

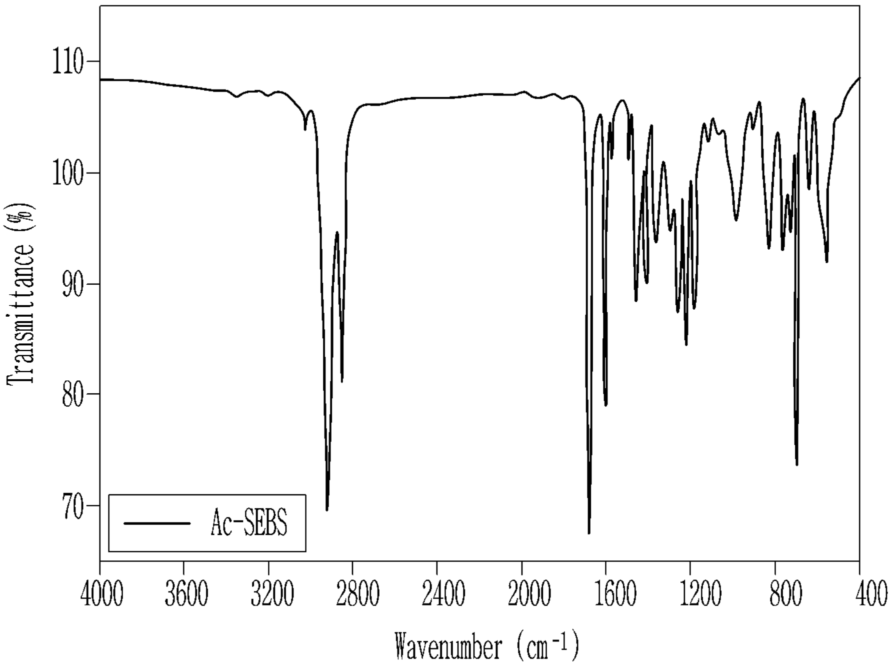
110
100
90
80
70
Transmittance (%)
Ac-SEBS
4000
3600
3200
2800
2400
2000
1600
1200
800
400
Wavenumber (cm-1)

[Fig. 7a]

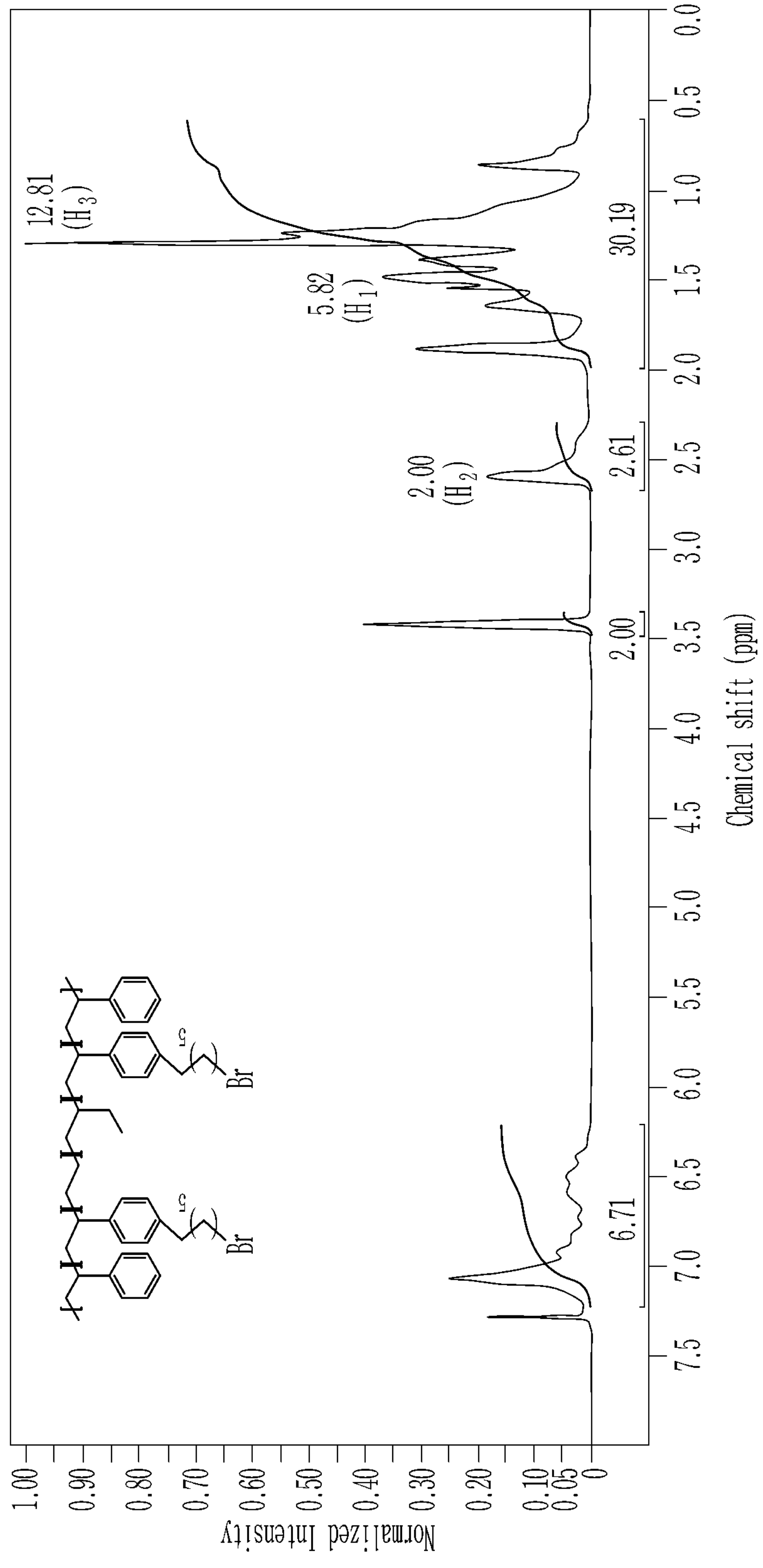
Normalized Intensity
1.00
0.90
0.80
0.70
0.60
0.50
0.40
0.30
0.20
0.10
0.05
0
Chemical shift (ppm)
0.0
0.5
1.0
1.5
2.0
2.5
3.0
3.5
4.0
4.5
5.0
5.5
6.0
6.5
7.0
7.5
12.81 ($H_3$)
5.82 ($H_1$)
2.00 ($H_2$)
30.19
2.61
2.00
6.71

[Fig. 7b]

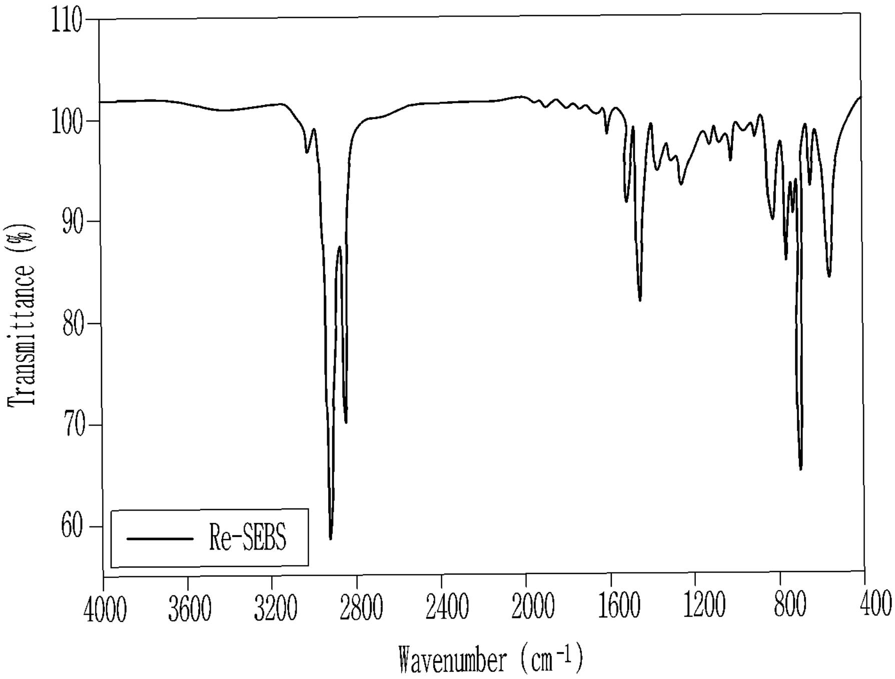
Transmittance (%)
110
100
90
80
70
60
Re-SEBS
4000
3600
3200
2800
2400
2000
1600
1200
800
400
Wavenumber (cm-1)

[Fig. 8]

(a)

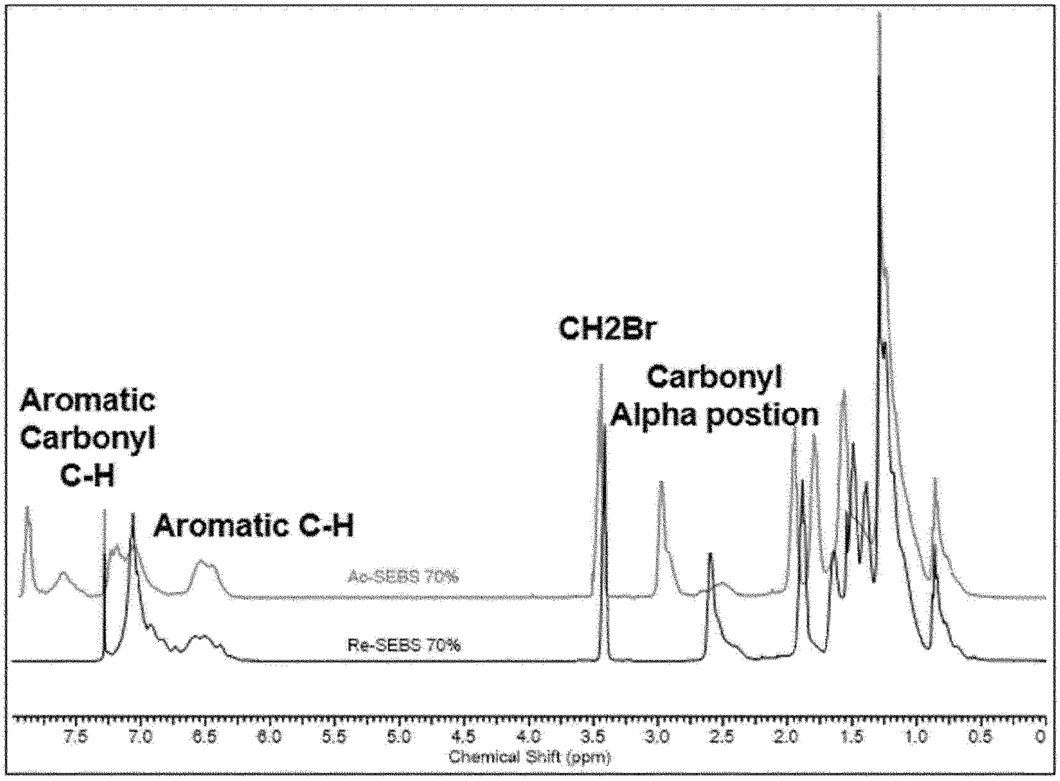
CH2Br
Carbonyl
Alpha postion
Aromatic
Carbonyl
C-H
Aromatic C-H
Ac-SEBS 70%
Re-SEBS 70%
7.5 7.0 6.5 6.0 5.5 5.0 4.5 4.0 3.5 3.0 2.5 2.0 1.5 1.0 0.5 0
Chemical Shift (ppm)

(b)

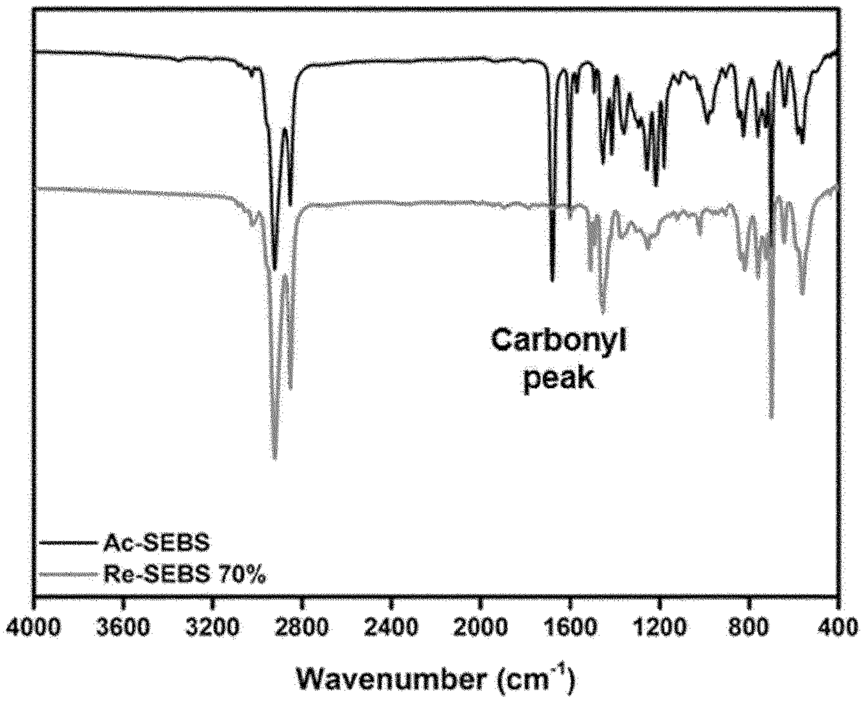
Carbonyl
peak
Ac-SEBS
Re-SEBS 70%
4000 3600 3200 2800 2400 2000 1600 1200 800 400
Wavenumber (cm-1)

[Fig. 9]

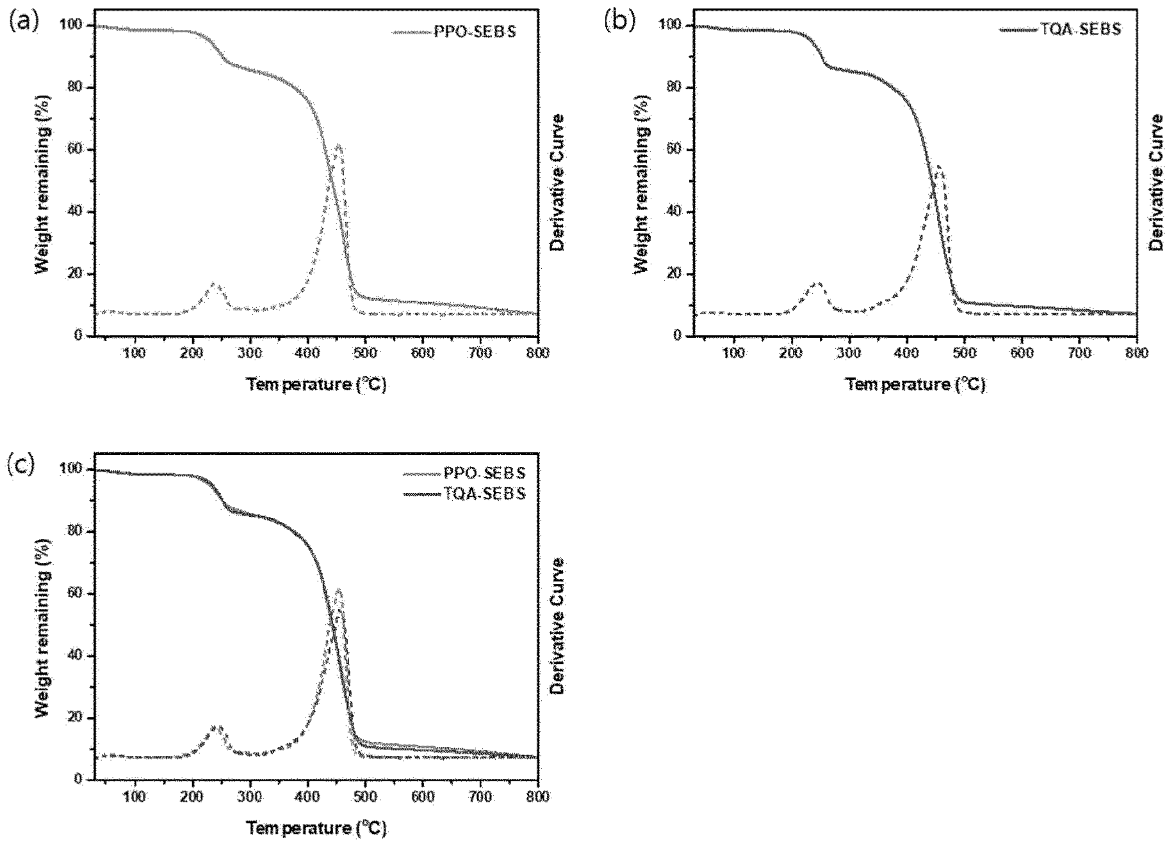
(a)
PPO-SEBS
Weight remaining (%)
Derivative Curve
Temperature (℃)
(b)
TQA-SEBS
Weight remaining (%)
Derivative Curve
Temperature (℃)
(c)
PPO-SEBS
TQA-SEBS
Weight remaining (%)
Derivative Curve
Temperature (℃)

[Fig. 10]

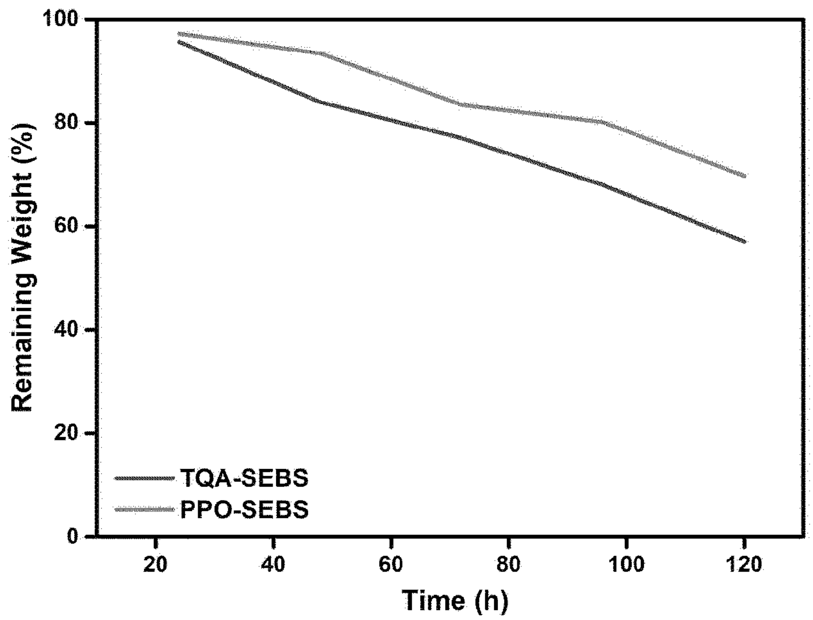
Remaining Weight (%)
Time (h)
TQA-SEBS
PPO-SEBS

[Fig. 11]

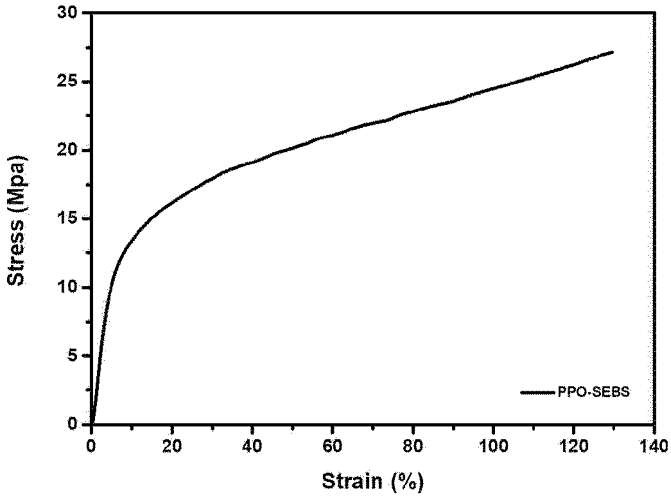

30
25
20
15
10
5
0
Stress (Mpa)
0
20
40
60
80
100
120
140
Strain (%)
PPO-SEBS

**INTERNATIONAL SEARCH REPORT**

International application No. **PCT/KR2023/017424**

**A. CLASSIFICATION OF SUBJECT MATTER**

**C08F 299/00**(2006.01)i; **C08F 212/14**(2006.01)i; **C08F 212/12**(2006.01)i; **C08F 212/08**(2006.01)i; **C08F 210/06**(2006.01)i; **C08F 210/08**(2006.01)i; **C08F 8/30**(2006.01)i; **C08G 81/02**(2006.01)i; **C08J 5/22**(2006.01)i; **C25B 13/08**(2006.01)i

According to International Patent Classification (IPC) or to both national classification and IPC

**B. FIELDS SEARCHED**

Minimum documentation searched (classification system followed by classification symbols)

C08F 299/00(2006.01); C08G 81/02(2006.01); C08J 5/22(2006.01); H01M 8/0239(2016.01); H01M 8/083(2016.01); H01M 8/1067(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 음이온 교환막(anion exchange membrane), 가교 공중합체(crosslinked copolymer), 폴리(스티렌-에틸렌-부틸렌-스티렌)(poly(styrene-b-ethylene-co-butylene-b-styrene)), 폴리페닐렌옥사이드(polyphenylene oxide)

**C. DOCUMENTS CONSIDERED TO BE RELEVANT**

| Category* | Citation of document, with indication, where appropriate, of the relevant passages | Relevant to claim No. |
|---|---|---|
| A | SUNG, S. et al. Preparation of crosslinker-free anion exchange membranes with excellent physicochemical and electrochemical properties based on crosslinked PPO-SEBS. Journal of materials chemistry A. 2021, vol. 9, pp. 1062-1079. See abstract; page 1068; formula 1; and figure 1. | 1-3,11-13 |
| A | KR 10-2278518 B1 (PUSAN NATIONAL UNIVERSITY INDUSTRY-UNIVERSITY COOPERATION FOUNDATION et al.) 15 July 2021 (2021-07-15) See entire document. | 1-3,11-13 |
| A | CN 114456393 A (WUHAN TECHNOLOGY UNIVERSITY) 10 May 2022 (2022-05-10) See entire document. | 1-3,11-13 |
| A | JEON, J. Y. et al. Synthesis of aromatic anion exchange membranes by Friedel–Crafts bromoalkylation and cross-Linking of polystyrene block copolymers. Macromolecules. 2019, vol. 52, pp. 2139-2147. See entire document. | 1-3,11-13 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 February 2024** | **07 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2023/017424

C. DOCUMENTS CONSIDERED TO BE RELEVANT

| Category* | Citation of document, with indication, where appropriate, of the relevant passages | Relevant to claim No. |
|---|---|---|
| A | KR 10-2022-0026219 A (INCHEON NATIONAL UNIVERSITY RESEARCH & BUSINESS FOUNDATION) 04 March 2022 (2022-03-04)<br>See entire document. | 1-3,11-13 |
| PX | CHOI, J. et al. Understanding the effect of triazole on crosslinked PPO-SEBS-based anion exchange membranes for water electrolysis. Polymers. 31 March 2023, vol. 15, article no. 1736, pp. 1-19.<br>See abstract; figure 1; and scheme 1. | 1-3,11-13 |

Form PCT/ISA/210 (second sheet) (July 2022)

**INTERNATIONAL SEARCH REPORT**

International application No.
**PCT/KR2023/017424**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **10**
because they relate to parts of the international application that do not comply with the prescribed requirements to such an extent that no meaningful international search can be carried out, specifically:

Claim 10 refers to a claim violating the manner of referring to multiple dependent claims under PCT Rule 6.4(a), and thus is unclear.

3. ☑ Claims Nos.: **4-9, 14**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.
**PCT/KR2023/017424**

| Patent document cited in search report | Publication date (day/month/year) | Patent family member(s) | Publication date (day/month/year) |
|---|---|---|---|
| KR 10-2278518 B1 | 15 July 2021 | None | |
| CN 114456393 A | 10 May 2022 | CN 114456393 B | 27 June 2023 |
| KR 10-2022-0026219 A | 04 March 2022 | KR 10-2418821 B1 | 07 July 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220150712
- KR 102184530


### Non-patent literature cited in the description


- *J. Membr. Sci.*, 2018, vol. 564, 492-500
- **ZHIHUA WANG** ; **ZIMING LI** ; **NANJUN CHEN** ; **CHUANRUI LU** ; **FANGHUI WANG** ; **HONG ZHU**. Crosslinked poly (2,6-dimethyl-1,4-phenylene oxide) polyelectrolyte enhanced with poly (styrene-b-(ethylene-co-butylene)-b-styrene) for anion exchange membrane applications. *J. Membr. Sci.*, 2018, vol. 564, 492-500